# EUROPEAN PATENT APPLICATION

(11) **EP 3 764 255 A1**
(43) Date of publication of application: **13.01.2021**
(21) Application number: 19185707.7
(22) Date of filing: 11.07.2019
(51) Int. Cl.: G06F 21/35, G09G 3/20

(54) **SECURE INTERACTION SYSTEM AND COMMUNICATION DISPLAY DEVICE**

(71) Applicant: Slim HMI Technology, Taipei City 105 (TW)
(72) Inventor: TSAI, Hsiung-Kuang, 115 Taipei City (TW)
(74) Representative: Zimmermann, Tankred Klaus

(57) **Abstract**

A system includes a communication display device with a communication display device identifier, and a mobile computing device with a mobile computing device identifier. The mobile computing device includes a first transceiver. The communication display device includes an ARC module which including a display matrix and a second receiver. At least one portion of the display matrix is configured to wirelessly transmit an invisible string and to form a user-visible indication which the invisible string is relevant to. When the user-visible indication is selected, a channel is formed to connect the portion of the display matrix forming the user-visible indication, the first transceiver and the second receiver. The invisible string is coupled wirelessly to the first transceiver and the second receiver from the portion of the display matrix forming the user-visible indication, and the mobile computing device executes a task according to the invisible string.

## Description

### BACKGROUND

### Technical Field

The disclosure relates to a secure interaction system and communication display device.

### Related Art

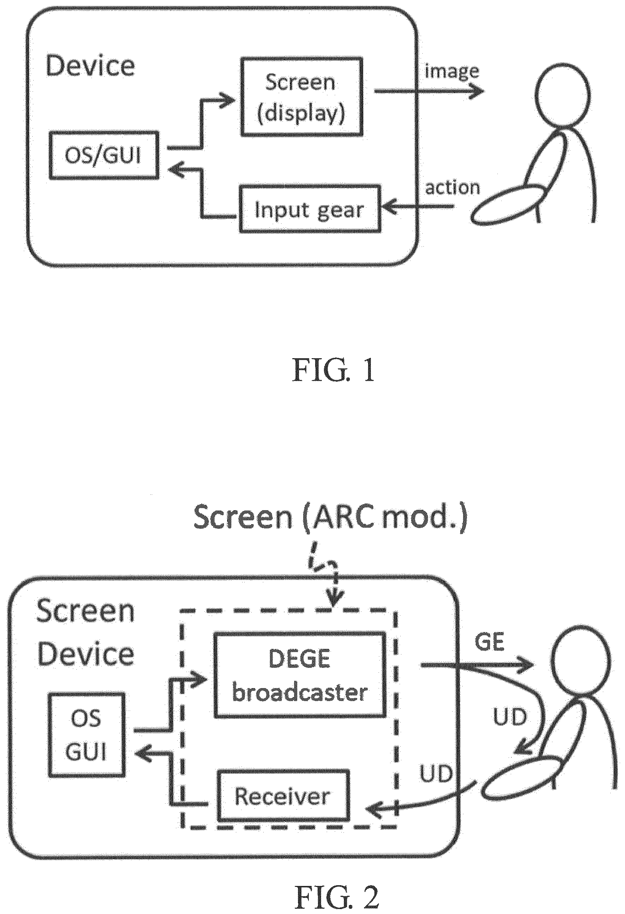

Present mechanism of user-device interaction (UDI) considers user as an independent party to receive and provide information for interacting with an electronic device. There are two major information paths in this UDI: image, from device to user, and action, from user to device. From device viewpoint, these also represent the components, display and user input, that will convert data to optical image and action to data respectively (FIG. 1).

This mechanism implicitly limits the information that user can provide. User has to memorize the information and provide it by multiple actions, i.e., character by character. For example, in password applications, it is known that the password size and randomness affect the effectiveness of protection. However, we have to compromise the protection with the memory and actions that human can afford in practice. Today, it commonly requires a password with minimum 6 to 8 alphanumerical characters (or 48 to 64 bits). In comparison, Advanced Encryption Standard (AES) suggests key length of 128, 192, or 256 bits for information protection. Both length and randomness challenge human brain to memorize such data. Complicated actions required for reproducing such data is another barrier for practical application.

Another issue of this mechanism relates to the weakness of human brain in computation. User can only make simple operation to respond, like comparing the image to select his input for, say, password. In digital signature, for example, it may need to generate the hash value of a document by cryptographic hash function. User cannot generate the hash by viewing the document, let alone to encrypt the hash with a secret key as his signature. The information that user can provide as input is limited under present interaction mechanism. It implies restrictions due to the memory and computation constraints of human brain and the complexity of actions required for reproducing.

In some cases, only allowed user can perform UDI. People adopt various mechanisms to recognize user by authentication such as password, fingerprint, or face recognition. These mechanisms may help device to recognize human at a moment but cannot keep tracking an authenticated person. These mechanisms are same as we temporarily open eyes to recognize a person, then close eyes and assume interacting with the same person. In addition, there can be only one authenticated person. In other words, present device must be a personal device for the mechanism cannot recognize more than one person. This restricts the application of device in more general scenarios such as multiple users operate a device jointly.

### SUMMARY

A system includes a mobile computing device and a communication display device. The mobile computing device includes a first transceiver configured to transmit and receive data wirelessly, a first storage coupled to the first transceiver, and a mobile computing device identifier. The communication display device includes a communication display device identifier and an ARC (action range communication) module. The ARC module includes a display matrix and a second receiver configured to receive data wirelessly. At least one portion of the display matrix is configured to wirelessly transmit an invisible string and to form a user-visible indication which the invisible string is relevant to. When the user-visible indication on a portion of the display matrix is selected, a channel is formed to connect the portion of the display matrix forming the user-visible indication, the first transceiver and the second receiver. The invisible string is coupled wirelessly to the first transceiver and the second receiver from the portion of the display matrix forming the user-visible indication through the channel, and the mobile computing device executes a task according to the invisible string.

In one embodiment, the first transceiver is configured to transmit an output string through the same channel to the second receiver. The second receiver is configured to receive the invisible string and the output string.

In one embodiment, the invisible string and the output string are carried by signals through the channel, the second receiver is configured to recognize the invisible string and the output string by distinguishing the characteristics of signals in amplitude, phase, frequency, signal level or time.

In one embodiment, the communication display device is configured to recognize a user who selects the user-visible indication according to the output string.

In one embodiment, the invisible string includes a command, and the task according to the command is to request the mobile computing device to output the mobile computing device identifier.

In one embodiment, the invisible string includes a command and a data string. The data string includes the mobile computing device identifier. The task according to the command is to request the mobile computing device to create and store a record, and to output a reply string as the output string. The mobile computing device creates the record on the first storage and generates the reply string according to the data string in the invisible string. The record includes at least a portion of the data string of the invisible string and the reply string.

In one embodiment, the user-visible indication represents creating an account on the communication display device or on a server connected to the communication display device and referred by a server-identifier, and the data string of the invisible string includes the communication display device identifier or the server-identifier. The record includes the communication display device identifier or the server-identifier, and the reply string includes a log-in string to login the account to be created. The communication display device receives the log-in string through the second receiver and creates an account, or provides the log-in string to the server and creates the account on the server.

In one embodiment, the user-visible indication represents registering a server on the mobile computing device, and the server connects to the communication display device and is referred by a server-identifier. The data string includes the server-identifier, and an identification string of the server and the task according to the command is to request the mobile computing device to store the server-identifier and the identification string on the first storage.

In one embodiment, the user-visible indication represents encrypting or decrypting at least one file. The data string includes a filename of the file. The record includes the filename, and the output string is a key for encrypting or decrypting the file. The communication display device receives the key from the second receiver and utilizes the key to encrypt or decrypt the file.

In one embodiment, the mobile computing device generates a random string through a random number generator based on data in the data string. The record and the reply string include the random string respectively.

In one embodiment, the user-visible indication represents logging out an account on the communication display device or on a server connected to the communication display device and referred by a server-identifier. The record includes the communication display device identifier or the server-identifier and a new log-in string to login the account next time. The reply string includes the new log-in string. The communication display device receives the log-in string through the second receiver and logs out the account, or sends the log-in string to the server and logs out the account on the server.

In one embodiment, the invisible string includes a command and a data string. The task according to the command is to request the mobile computing device to retrieve a record stored in the first storage. The mobile computing device finds the record in the first storage according to part of the data string and outputs at least part of the record in the output string.

In one embodiment, the invisible string includes a command and a data string. The task according to the command is to request the mobile computing device to encrypt or decrypt the data string according to a data stored in the mobile computing device.

In one embodiment, the user-visible indication represents authenticating a server connected to the communication display device and referred by a server-identifier. The invisible string includes a command and a data string, and the data string includes the server-identifier and an identification string of the server. The mobile computing device authenticates the server according to a computing result of computing a stored record in the mobile computing device including the server-identifier and the identification string. The mobile computing device further includes an indicator configured to show the result of authentication.

In one embodiment, each of the mobile computing device and the communication display device has a pair of keys including public key (pk) and secret key (sk) assigned by a public key infrastructure (PKI) to perform asymmetric cryptography for data transmission.

In one embodiment, the ARC module further includes a processing block and the processing block has another pair of keys, another public key and another secret key assigned by the same PKI for performing asymmetric cryptography on the data transmission with the processing block.

In one embodiment, the ARC module further includes a processing block that includes a second storage and is coupled to the display matrix and the second receiver. The processing block is configured to process source data from one or more information sources to output the invisible string by the display matrix and to display the user-visible indication by the display matrix. The one or more information sources includes at least one of the second receiver, an operation system of the communication display device and the second storage.

In one embodiment, the processing block is set to select the one or more information sources according to a data received by the second receiver.

In one embodiment, the processing block sets the second storage as the information source after the processing block does not receive data from the second receiver or from the operating system over a period of time.

A communication display device with a communication display device identifier includes an ARC (action range communication) module. The ARC module includes a display matrix, a second receiver and a processing block. At least one portion of the display matrix is configured to wirelessly transmit an invisible string and to form a user-visible indication which the invisible string is relevant to. The second receiver is configured to receive data wirelessly. The processing block includes a second storage and coupled to the display matrix and the second receiver. When the user-visible indication on a portion of the display matrix is selected, a channel is formed to connect the portion of the display matrix forming the user-visible indication, a first transceiver of a mobile computing device and the second receiver. The invisible string is coupled wirelessly to the first transceiver and the second receiver from the at least one portion of the display matrix forming the user-visible indication through the channel, and the mobile computing device executes a task according to the invisible string. The processing block is configured to process source data from one or more information sources to output the invisible string by the display matrix and to display the user-visible indication by the display matrix. The one or more information sources includes at least one of the second receiver, an operation system of the communication display device and the second storage.

According the embodiments of present disclosure described above, it is possible for user, as a cyborg, to use long random string at will for password or file encryption and perform complex computation as to provide the digital signature. Only one action suffices to provide the long random string or do the computation and output the results. The communication display device can recognize inputs from different cyborgs (inputter recognition) to provide multi-cyborg interactions. In other words, this is a way of continuous authentication, which the device can authenticate every input. We can have more secure way of interaction for both device and user.

### BRIEF DESCRIPTION OF THE DRAWINGS

The embodiments will become more fully understood from the detailed description and accompanying drawings, which are given for illustration only, and thus are not limitative of the present disclosure, and wherein:
FIG. 1 is the traditional mechanism to implement user-device interaction.
FIG. 2 is the action range communication (ARC) mechanism of user-device interaction.
FIG. 3 illustrates (a) the DEGE concept and (b) the way for a display matrix to generate DEGE.
FIG. 4 shows two different ways to initiate capacitive coupling, moving close two electrodes (type-1 AFDT) and bridging signal from one electrode to the other through a conductive media, like human body (type-2 AFDT).
FIG. 5 shows the applications that can be integrated on ARC platform as different AFDTs and broadcaster-receiver arrangements.
FIG. 6 compares (a) human input and (b) cyborg input based on the ARC mechanism.
FIG. 7 illustrates the cyborg input in more detail. (a) when selecting a DEGE on the broadcaster, i.e. the 'Login' DEGE as shown, the receiver of ARC mod. receives, in addition to UDi, an extra UDe provided by cyborg, (b) shows the signal flow in this cyborg input process. (c) shows the functional diagram of the mobile computing device WD and the format of record stored in WD.
FIG. 8 shows the way for a cyborg to create an account by using two DEGEs, with same GE but different UDs, to implement the protocols between screen device and WD.
FIG. 9 shows the DEGE for cyborg to provide username and password to login an account. Cyborg combines username and password as a log-in string and provides the whole string by one action.
FIG. 10 shows the DEGE for cyborg to (a) generate a random string as password and (b) log out an account while setting another random password to login next time.
FIG. 11 shows the flow to log out that will update the tag, i.e., change the data required to login next time. To login, each time will require a different tag.
FIG. 12 shows the flow for bidirectional authentication. Server and cyborg know each other beforehand, i.e., register mutually by exchanging and storing other's identity (tag). To recognize each other later, cyborg and server can login mutually by sending one's identity for verification and verifying other's identity.
FIG. 13 shows present authentication mechanism. Only the screen device can confirm both the identities of server and user.
FIG. 14 shows the flow for cyborg to sign a document, i.e. to provide digital signature.
FIG. 15 illustrates (a) the structure of a reconfigurable ARC module (Re-ARC mod.) and various operation modes of Re-ARC mod., including (b) the normal device mode that user/cyborg interact with screen device, (c) virtual device mode 1 that user interacts with WD, and (d) virtual device mode 2 that user/cyborg interacts with Re-ARC mod.
FIG. 16 illustrates (a) a Re-ARC mod. and (b) a WD that each with a pair of public key and secret key, (pkₐ, skₐ) and (pk_{c}, sk_{c}), issues by a PKI. (c) shows the virtual device mode 3 operation.
FIG. 17 shows the flow of file encryption by cyborg.
FIG. 18 shows the flow of file decryption by cyborg.
FIG. 19 shows a way for continuous authentication or inputter recognition, which screen device authenticates the cyborg for every input.
FIG. 20 shows another way to implement continuous authentication or inputter recognition, including the diagram of WD with echo mode function, the command to generate echo signal ES, and the way for receiver to recognize WD.
FIG. 21 shows an example of inputter recognition. The scenario is three cyborgs interacting with one screen device to provide input over the screen displayed. According to the steps, screen device can also decide the cyborgs that are allowed to provide the input.

### DETAILED DESCRIPTION OF THE DISCLOSURE

The embodiments of the disclosure will be apparent from the following detailed description, which proceeds with reference to the accompanying drawings, wherein the same references relate to the same elements. To simplify the descriptions, we shall use screen device that has network and display function like computer or cell phone to denote the communication display device and a wearable device WD, with functions to be specified, to exemplify the mobile computing device.

The description includes following topics. We first introduce the mechanism and elements of ARC (action range communication). ARC is a universal mechanism that serves for user input and short-range data transmission (SRDT). In ARC, we can have another device (such as WD) join the user/screen device interaction, i.e., user input to screen device, and assist user in providing the input information. In this sense, through the setup of ARC, human and WD can combine into a cyborg and work as one unit to interact with a screen device. This turns UDI into a cyborg-device interaction CDI. In other words, through the ARC setup, WD can join a UDI process and assist user in handling digital data, such as generate, store, or compute data as if user performs these activities. More specifically, WD can memorize password so that user can set and forget the password, generate long and random string for password, or change the password frequently such as setting new password when logs out. Server/device can recognize a cyborg not by username/password, fingerprint, or face, but by a string as identity. For each input, cyborg can provide his identity so that device/server can verify who provides the input, an inputter, recognition or continuous authentication. Thus, server/device can interact with not just one cyborg but multiple cyborgs together through ARC. Cyborg can authenticate server/device, a bidirectional authentication, rather than only to be authenticated like human does. Cyborg can freely encrypt/decrypt files with different long random strings for memorizing data is not a limitation. We can have a reconfigurable ARC transceiver module to generalize UDI as various virtual devices interacting with cyborg/user and perform authentication or screen lock as intrinsic functions.

The general concept of ARC illustrates the transmission of information carried by a new information carrier DEGE (data embedded graphic element). DEGE uses two parts to express information, image (GE) and data (UD). The transmission of DEGE means user relies on GE to establish a channel for transmitting UD from a DEGE broadcaster to a receiver. We use action facilitating data transmission (AFDT) to describe such transmission process. Traditional display can be modified into a DEGE broadcaster. These key elements and the whole mechanism will be described in the following.

Compared to the traditional mechanism of UDI (FIG. 1), ARC (FIG. 2) integrates image (selected by user) and data (content of the selection or input content) into one single information unit that transmits from a broadcaster to receiver all located on the same device. From device perspective, the information unit loops back to itself, an intra-device transmission. Because of broadcasting, such intra-device transmission is not a trivial transmission for not every information unit will return. The returned unit gives a message that it was chosen or selected. In this mechanism, user does not act as an information source to provide his own information as in FIG. 1. User is part of the channel that helps to bridge an information unit from broadcaster to receiver. Or, from user's perspective, to select an information unit from broadcaster and transfer it to the receiver. We name this select-transfer process as action facilitating data transmission AFDT. The broadcaster and receiver form an ARC transceiver module (ARC mod.) that functions like the transceiver module in data communication. However, the broadcaster will provide an integrated information unit, image and data not only data, and information can loop back to the receiver of the same transceiver, intra-device transmission.

This mechanism is applicable to not only UDI but also short-range data transmission (SRDT) like the operation of near field communication or NFC. In NFC, people focus only on the data transmission, which is insufficient to describe the complete process. It requires image to guide user's action in order to complete the operation. Image and action are two indispensable factors in NFC but are neglected. We should consider them together with the data transmission. The whole process is same as the ARC mechanism of UDI that user selects an information unit from broadcaster to receiver. Different from UDI, the broadcaster and receiver locate on two separate devices in NFC or SRDT. It is an extra-device transmission. Thus, we can treat SRDT and UDI as a new type of information transmission that relies on three key elements, image, action, and data transmission, to complete the process. They differ in the arrangement of broadcaster relative to receiver, on separate devices is SRDT and on same device is UDI. One broadcaster can serve for intra- and extra-device transmission. This is the foundation to integrate UDI and SRDT in one transmission platform ARC. In the following, we shall describe the information carrier DEGE, transmission process AFDT, and broadcaster in more detail.

### DEGE

In ARC, information is not represented by data alone but by an image-data composite structure, named data embedded graphic element (DEGE). DEGE includes two parts, graphic element (GE) and user data (UD), and can be expressed as (GE, UD). GE and UD represent the same information content but for different information recipients, GE for user and UD for a data receiver. DEGE resembles a hypertext, which a text (as GE) associates with a hyperlink (as UD), but not the same. Hypertext does not actually combine hyperlink with text together. The association relies on the interpretation of graphic user interface GUI. In present UDI mechanism, text is represented by its position and selecting a text means to provide a position to GUI. GUI then translates the position into the hyperlink. It uses a metadata describing the text, i.e. position, to link text and hyperlink together. This mechanism is not applicable to the extra-device case for it relies on the text-position mapping to extract hyperlink from a position. Only the position is meaningless. On the other hand, we form a DEGE by attaching UD (hyperlink) with the GE (text) directly at the same location without relying on the position metadata. UD is not metadata but data representing information and other device can recognize. Thus, it can serve for carrying information in extra-device cases. Furthermore, DEGE is more general for it is not restricted to the text-hyperlink combination. We can combine any icon (GE) and data (UD) together as one unit. This provides a general way to represent information that both user and device can understand.

Three features of DEGE should be noted. Because of GE, information carried by DEGE will occupy certain physical space likes a tangible entity. Since same information is expressed as GE and UD, DEGE includes redundancy in its structure. When distributing information among heterogeneous parties, such as human and device, such redundancy can simplify the distribution process. DEGE is more general to represent information than data and image. We can consider data and image as special DEGE that one element is 'null', i.e., data and image correspond to ('null', UD) and (GE, 'null') types of DEGE, respectively. This is a universal way to represent information for device-human society.

We can exemplify DEGE as a key on the keyboard: GE is the character 'A' and UD is its ASCII code 41H. Or, we can generalize this concept and construct more sophisticate DEGE, such as a text icon 'This is the sound of violin' for GE and UD is an audio file playing violin. We can consider a screen image is a collection of DEGEs similar to a keyboard layout. Screen in ARC, instead of merely displaying image elements in traditional sense, can 'display' DEGEs. It is more adequate to replace the word 'display' by 'broadcast' as, from information perspective, the process is to provide various pieces of information for user to select as a radio station does.

### Broadcaster

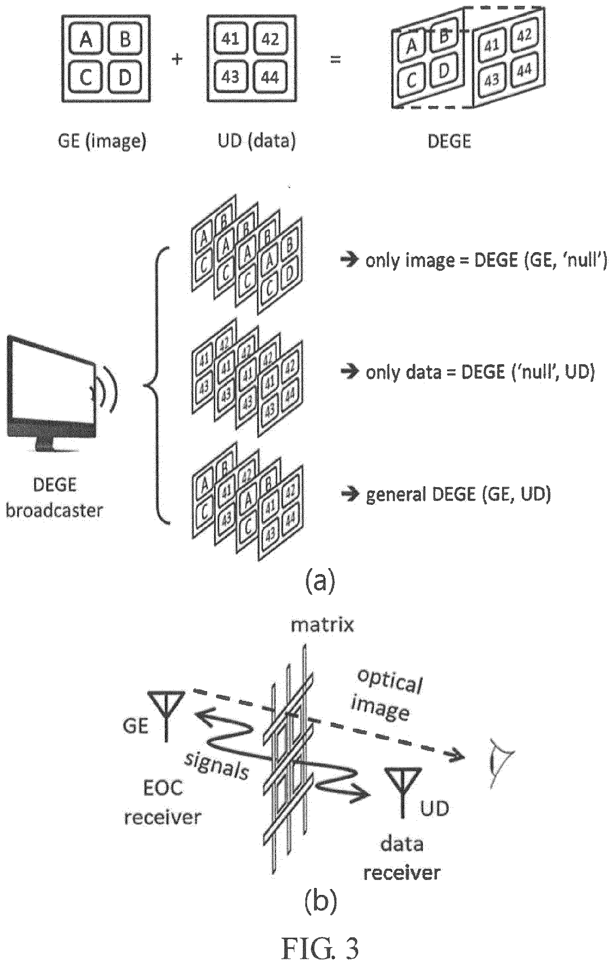

To build a DEGE broadcaster, we need to restructure a display. A simple way to illustrate this modification is a display becomes a DEGE broadcaster when it 'displays' an optical image frame and an electrical data frame alternately. The overlapping of these two frames in space forms a collection of DEGEs and the screen can provide various DEGEs for user to select (FIG. 3(a)). The display matrix needs to carry two different types of signals to generate alternate frames, i.e., one for producing optical image (GE) and the other for electrical data (UD). In ARC, display matrix functions as an antenna shared for transmitting information to human eyes (GE) and data receivers (UD). As shown in FIG. 3(b), we can abstractly consider all components, other than the display matrix, of a display form a receiver for electro-optical conversion (EOC), to convert the received electrical signals into optical image (GE). A data receiver is required to receive signals of UD and we can flexibly arrange this data receiver to suit for intra and extra-device transmission. Indeed, it is similar to the arrangement in data communication that the broadcaster sends out two signals, one for EOC receiver (received and turned into GE) and the other for data receiver (received as UD).

Such frame structure is only for illustration. The more detail and general way to generate DEGE by display matrix can refer to the reference ("Action range communication (ARC): A digital architecture for user and device interaction", JOURNAL OF THE SOCIETY FOR INFORMATION DISPLAY, Volume25, Issue8, August 2017, Pages 486-495). The reference is incorporated herein by reference in its entirety. Here we summarize the general guidelines for the matrix to generate DEGE. Matrix can produce GEs only when proper signals are delivered to the matrix. These are the display signals that currently been applied to the matrix for producing image. If 'improper' signals are used, we will not have images but end up radiating electrical signals for transmitting data, or an electrical data frame for UD. Some examples of such 'improper' signals are following: signal frequency higher than 1MHz or signals do not enter the pixels but appear only on the line electrodes etc. Thus, we can use such signals to carry UD for data transmission. Similar as mixing signals with different frequencies in data communication, we can combine these signals together and send to the matrix. According to the structure of FIG. 3(b), the EOC receiver will convert only the display signals into image and discard those signals for UD frame. On the other hand, when a channel is established, a data receiver can extract UD from the 'improper' signals. In this way, the display matrix serves to broadcast DEGE.

It is flexible to adjust the broadcaster for transmitting various DEGEs, from DEGE that GE and UD are not null to one of them is null (image or data). This is similar as a data transmitter allocating its bandwidth dynamically for transmitting data to different receivers, in this case, the EOC receiver and data receiver. In the extreme situations when matrix broadcasting only (GE, 'null') or ('null, UD) types of DEGEs, the broadcaster becomes a display (TV or monitor) and data transmitter, respectively. Between these extreme cases, broadcaster can broadcast DEGEs for UDI such as browsing or text editing. We can change the role of broadcaster dynamically by allocating the broadcasting contents for two receivers. However, we shall follow a guideline while allocating the contents. The allocation should not affect the visual sensation of eyes, such as notable lag between GE frames. The actual criteria may vary according to the scenario. For example, video content is more sensitive to the lag than text-based contents and affords to transmit only simple UD.

### AFDT

The process to transmit DEGE includes two steps: select and transmit, i.e., first establish a channel then transmit the signals. We need to setup a channel first. User's action to select a DEGE will establish a channel for transmitting UD from broadcaster to receiver. Short-range signal can transmit through the space between two non-contact electrodes by capacitive or inductive coupling. We should focus on the capacitive coupling in the following. User can shrink the distance between two electrodes by action so that significant signal can be detected on the un-signaled electrode. In other words, 'shrinking distance' means to select and is the step to establish channel by action. Once channel is established, transmitting data will go through signal propagation that people know already. In comparison, the data transmission based on far-field signal such as Wi-Fi is a one-step process, which only considers the signal propagation. It is a special case of this two-step process, which the channel has been established beforehand. However, we shall return to this two-step process as a general way to transmit information. Such two-step process is common in practice. For example, when we use a smartcard for payment or entrance control, we need to activate the transmission by action. In essence, the action is to setup a channel for transmission. It is clear that we name such two-step process as action facilitating data transmission or AFDT. AFDT serves to transmit DEGE in ARC. Indeed, we do not need to transmit the whole DEGE (GE, UD). Only UD suffices to represent the whole information because of the redundancy. Thus, a channel for transmitting UD means to transmit the DEGE as well.

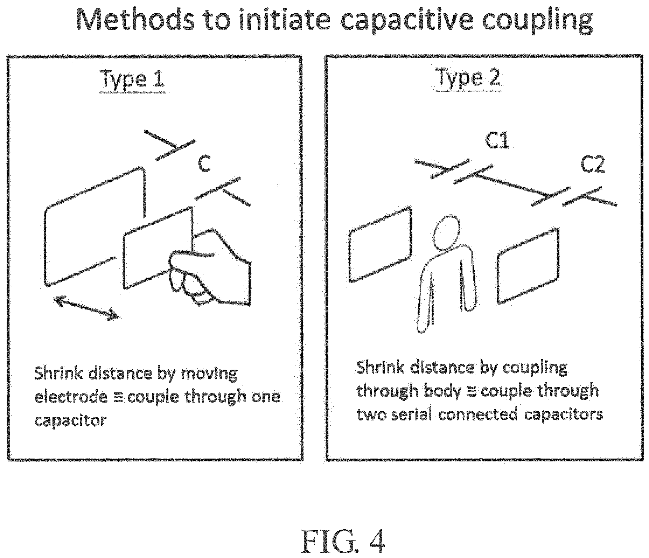

As shown in FIG. 4, user may have two different ways to shrink the distance, one is to move close two electrodes (type-1) and the other is to bridge signal through conductor such as body (type-2). From circuit viewpoint, signal couples through one capacitor in the first case and two serial connected capacitors in the second. In type-2 case, body can acts like a conductive wire similar to the role in capacitive touch sensing.

### ARC mechanism

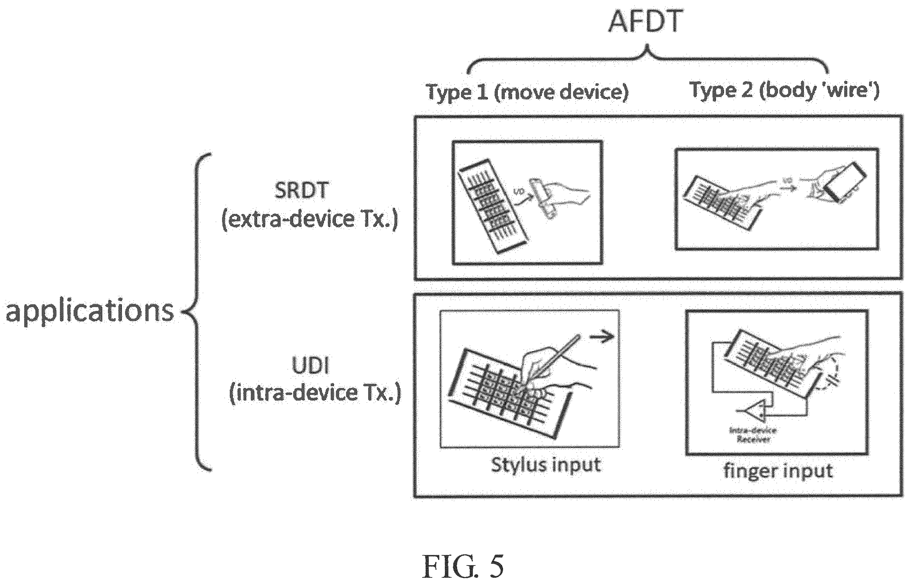

Based on DEGE, broadcaster, and AFDT, the ARC mechanism includes following steps. A broadcaster sends out DEGEs for user to select; user's action to select a DEGE setups a channel to transmit the UD to receiver; and the receiver learns user's selection from the UD. From the perspective of receiver, the result is same as data transmission though the whole process is more complicated than data transmission. In spite of all the DEGEs shown on a screen, in the end, we only need to focus on the selected DEGE and discard those unselected. This mechanism can serve for various applications (FIG. 5). In view of UDI, on-screen input by finger touch is an intra-device transmission of DEGE through type-2 AFDT and stylus input is type-1 AFDT. SRDT is extra-device transmission through type-1 or type-2 AFDT. NFC belongs to a SRDT through type-1 AFDT that people use a label (NFC symbol) as GE to mark the location and indicate data transmission is available. The label is a static GE, which cannot change easily and tells user the purpose of transmission implicitly. The label combining with the data (to be transmitted) forms one single DEGE for user to select. In this case, user has only two choices, select or not select. We can replace such single and fixed DEGE (fixed label and gears dedicated to transmit data for fixed purpose) by a more general DEGE broadcaster to enrich the selection and have dynamically changeable selections. FIG. 5 implies the way ARC integrates UDI and SRDT. We do not need separate hardware for UDI and SRDT, like a touch sensor for UDI and a data transceiver for SRDT. A broadcaster can serve for both by, for example, encoding and only the specific receiver can decode the UD. We can include the traditional UDI operation in ARC mechanism. Indeed, position is a special way to encrypt UD that only intra-device receiver can recognize. We do not need to extract the position of selection by gears like touch sensor. We can have screen to broadcast (GE, position) DEGE for user to select. The selected UD is position that only meaningful to an intra-device receiver. This unifies UDI and SRDT under ARC framework and simplifies the device structure.

To illustrate the disclosure, we consider user wears a wearable device WD (e.g. a wristband) and performs UDI on a screen device. As shown in FIG. 5, both UDI (finger input) and SRDT can occur together in a type-2 AFDT, i.e., in one selection from user standpoint. In this case, We can mix finger input (type-2 AFDT) with SRDT through type-1 AFDT as well for WD can move with user action and all distances shrink together. However, all through type-2 AFDT is easier for illustration and does not need to rely on the hand wearing WD to perform UDI. Instead of having SRDT to transmit data irrelevant to UDI, we shall consider these two transmissions work together as one transmission for a single purpose. They are relevant rather than irrelevant transmission. For example, when user selects to login a server in a UDI, the action can evoke an SRDT and have WD to provide username and password for him. Regardless of the data complexity, only one action is required to enter the whole string. User and WD form a cyborg that WD, like part of user, can operate in coordinate with user action in a UDI. Since no extra action is required to take care the operation of WD, the device WD can assist user, concisely and practically, in processing information, such as memorizing or computing complex data. Cyborg widens the data scope that human can manage, such as use a password with 20 random characters, and enhances the information security.

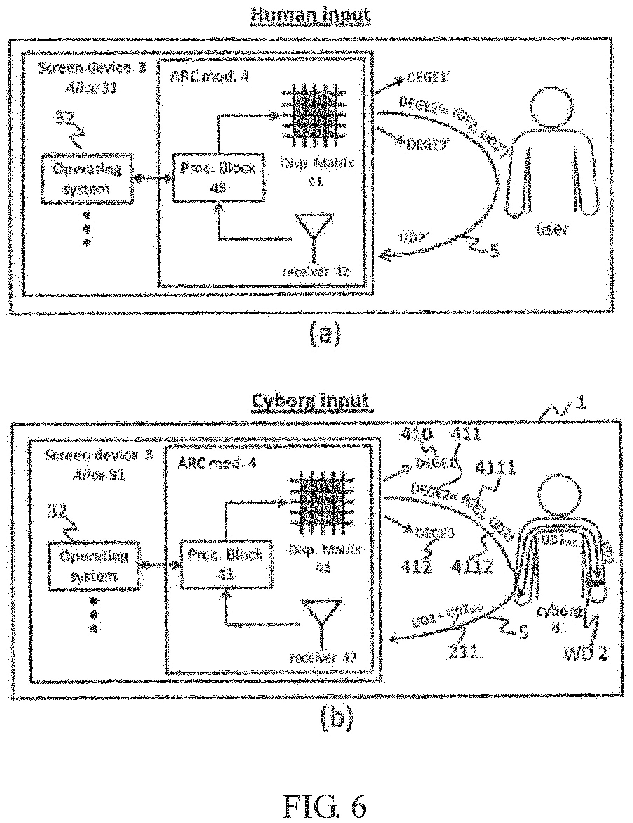

FIG. 6 illustrates the difference between (a) human input and (b) cyborg input based on ARC. As shown, the screen device 3 provides ARC operation through a module, ARC mod. 4, that includes a processing block (Proc. block 43), DEGE broadcaster 41, and receiver 42. The Proc. block 43 is to process input data from operating system 32 into DEGE and the received data into an output data for operating system 32. User can select a DEGE (DEGE2' and DEGE2 411 in FIGS. 6(a) and 6(b) respectively) on the broadcaster by touching the DEGE and setup a channel 5 (type-2 AFDT through body) between broadcaster and receiver. The signals of UD2' and UD2 4112 will pass through channel 5 to receiver 42 in FIG. 6(a) and to WD 2 and receiver 42 in FIG. 6(b), respectively. This leads to an input of UD2' by human in FIG. 6(a). In case of cyborg (FIG. 6(b)), we can enrich the input by including the information, such as command COMMAND and data DATA for WD 2 in the selected UD2 4112. WD 2 provides an output (UD2_{WD} 211) according to UD2 4112. The receiver 42 couples signals from channel 5 and receives both the selected UD2 4112 (from broadcaster same as in human input) and the UD2_{WD} 211 (from WD 2). Screen device 3 receives two pieces of information, UD2 4112 and UD2_{WD} 211, as an input from cyborg. Thus, cyborg input will lead to an input of (UD2 4112 + UD2_{WD} 211) instead of UD2' in traditional user input.

UD2 4112 is transmitted within the screen device 3 (intra-device transmission) and can be encoded arbitrarily as long as all DEGEs are distinguishable. This justifies that we may even use the COMMAND/DATA for WD 2 as UD2 4112 rather than restrict to use the position of GE2 4111 as UD2 4112. Thus, through UD2 4112, screen device 3 can send information to request WD 2 for storing a data or request a stored data from WD 2 and WD 2 returns the stored data as UD2_{WD} 211.

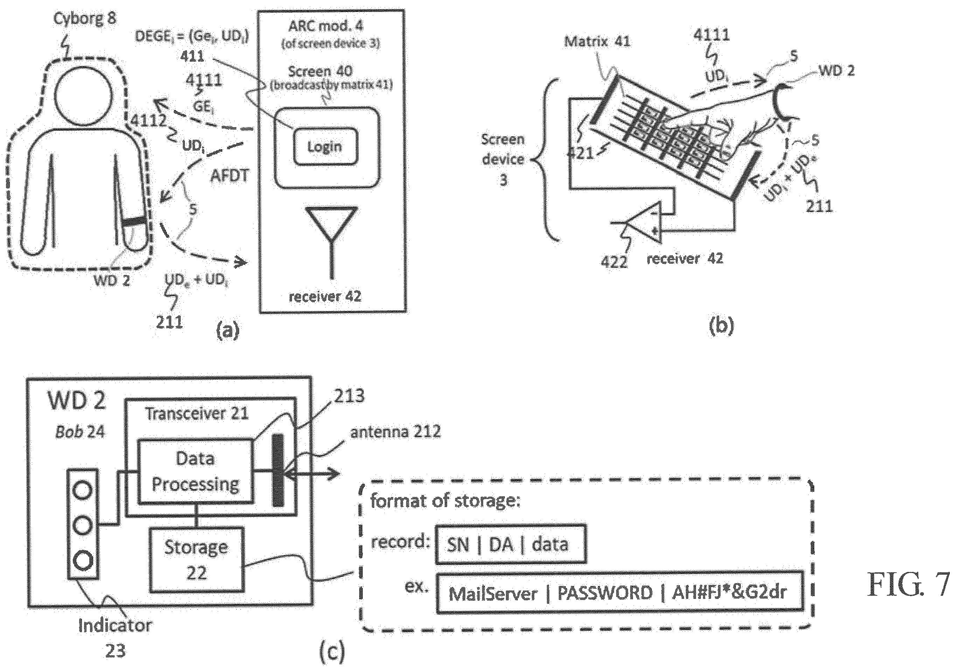

More details of cyborg operation through ARC mechanism are illustrated in FIGS. 7(a) to 7(c). FIG. 7(a) shows a screen device 3 and a user with WD 2. The device 3 includes matrix 41 that broadcasts a screen 40 for user to select and a receiver 42. The login DEGEi 411 has GEi 4111 to assist user for selection and the action to select will establish channel 5 to connect matrix 41, WD 2, and receiver 42. The UDi 4112 can pass through 5 to 42 as user input and to WD 2 as an input COMMAND/DATA. WD 2 can react upon 4112 to output UDe 211. FIG. 7(b) shows the signal flow in this cyborg/ARC mechanism, Action to select the DEGE results in a type-2 AFDT to connect broadcaster (matrix 41), WD 2, and receiver 42. The receiver 42 includes receiving antenna 421 surrounding the matrix and signal processing 422. FIG. 7(c) depicts the functional blocks in WD 2 related to cyborg/ARC mechanism and the format of record stored in the storage of WD 2, which simplifies the explanation for various embodiments. As shown, WD 2 includes a transceiver 21 for data input and output, storage 22 for storing data, and indicator 23 to show the status of WD 2 or the results of data operation. The indicator 23 can be any means that can provide controllable visual indications, such as indication lamp, electronic label, or various types of display such as segment display, passive matrix display, or active matrix display, etc. WD 2 has a set of commands and operates based on the COMMAND/DATA input through transceiver 21.

As shown in FIG. 7(a), user and WD 2 can be treated as one unit, i.e., a cyborg 8. In this cyborg operation, it is essential to simplify user activity that all transmissions (user input and the input and output of WD 2) use the channel 5 established by the action to exchange data or, in other words, combining user input and data transmission in one action. Present data communication only considers the transmission between devices, like Wi-Fi or Bluetooth, and cannot integrate with use input. Thus, a person with his phone does not form a cyborg. He can operate the phone to fetch data from a computer through Bluetooth. However, he needs to proceed step by step, connect the computer, find the data, select the data and move it, rather than to complete the whole process by one action. In other words, present UDI does not integrate with data transmission in parallel as one transmission but, at most, cascades user input and data transmission in series and user has to provide all the COMMAN/DATA.

Similar to the network operation, we assume that screen device 3 (WD 2) has a name *Alice* 31 *(Bob* 24), this name is used for designating the information source or recipient as an identifier. SD-ID and WD-ID are used to represent these names in general cases. To illustrate various embodiments, we assume that WD 2 has an instruction set as shown in Table 1. Screen device can send information to WD by addressing the recipient's name WD-ID *(Bob* 24). WD stores information as a record that each record may include at least three fields, source name (SN), data attribute (DA), and data (FIG. 7(c)). SN denotes the party's name associated with this record such as SD-ID or the name of a server etc. and DA specifies the attribute of data such as USERNAME or PASSWORD etc. For example, the username X and password Y of an account on server *ServN* can be stored as one record, *'ServN,* USERNAME, X, PASSWORD, Y' or two separate records, *'ServN,* USERNAME, X' and *'ServN,* PASSWORD, Y'. The 'GSO' commands will generate, store, and output a random number RN with size s, if specified. 'GET' will output a record stored on WD; 'ST' is to store a record on WD; 'WHO' will enquiry WD about its name, i.e., WD-ID. For simplicity, we omit the delimiters (start or end of transmission) in the transmission. We may add more commands for sophisticated protocols such as digital signature described later; however, the fundamental concept is the same. The command is not the focus of this disclosure but the way to embed a COMMAND/DATA within user input for WD 2 and the benefits of such composite process.

**Table 1. Instruction set of WD.**

| Input | Output | Description |
|---|---|---|
| GSO(WD-ID, SN, DA, s) | RN | SN requests WD-ID to generate and output a random number RN with size s (option), to be used as DA and store as a record (SN, DA, RN) on WD-ID |
| GET(WD-ID, SN, DA) | data | SN requests WD-ID to output the record associated with SN and to be used as DA |
| ST(WD-ID, SN, DA, data) | --- | SN requests WD-ID to store a record (SN, DA, data) |
| ENCRYPT(WD-ID, SN, hi) | Encrypted h1 | SN requests WD-ID to encrypt h1 by its secret key and output the result |
| WHO(SN) | WD-ID | SN requests WD to output its name WD-ID |

To justify channel 5 can support the transmission of lengthy UD, we can compare the channel existing period (i.e., user holds his action as a type-2 AFDT through body) with the broadcaster data rate. It is reasonable to assume UD is carried by signals with 1MHz frequency or about 1M bit per second data rate. Since the time scale of user's action is in ∼msec (10⁻³ sec) range, it suffices to transmit several Kbits data in an action without bringing user's attention. The time scale difference between action and data rate justifies the transmission of lengthy information (COMMAND and DATA as UD) in an action. We can combine several DEGEs in a process to extend the channel existing period or to simplify the progress. For example, we can change the GE (i.e., another DEGE) to inform user prolonging the action for transmitting even longer data until the transmission is complete. Or, a first DEGE is dedicated for user input and a second DEGE (same GE but different UD) is for exchanging data with WD 2. These two DEGEs are issued at the same location and within the period of user action. Indeed, due to the time scale difference and the way to prolong the channel 5, we can implement not only a single transmission but also a series of protocols between screen device 3 and WD 2. This means two devices can dialogue to complete a complex task when channel 5 exists.

We consider the situation to authenticate a cyborg and illustrate two embodiments, first, cyborg will register an account on screen device and the second is to login the created account. WD assists user in providing information for authentication like username or password. We can replace screen device by a server (i.e. use the server name *ServN* as the source name SD-ID in the command) and apply the embodiments for a server connected to screen device to authenticate cyborg. We emphasize the way that WD can coordinate with user to memorize and to provide the memorized information automatically while create an account or login.

### Embodiment 1 - Cyborg Registration

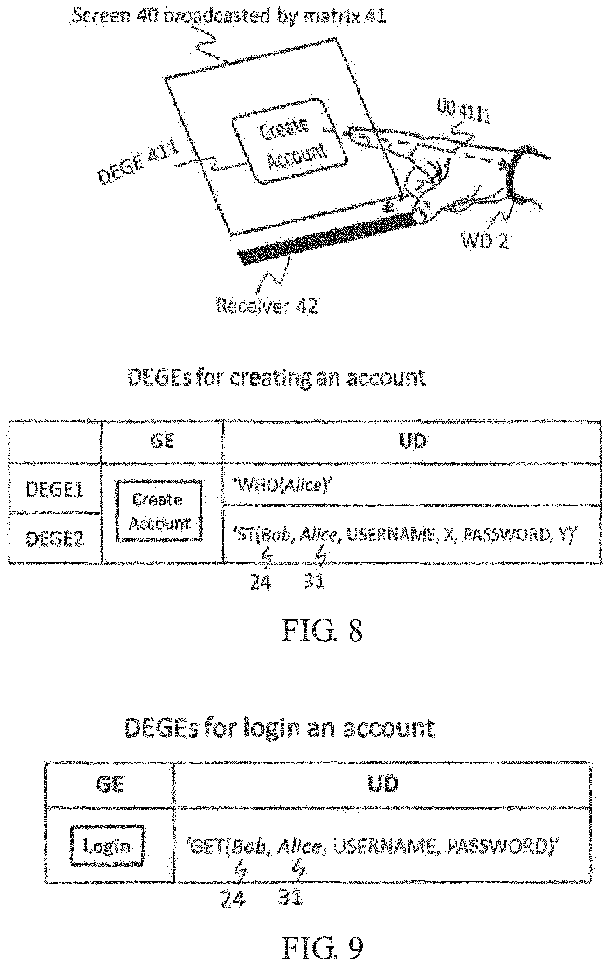

During registration, cyborg will create an account on a server or screen device 3 and 'memorize' (store on WD 2) information (login information) to login in the future. The critical step is to 'memorize' login information. There are several ways to set and store the login information on WD 2. User can set information as present then save all information on WD 2 at the final step, i.e., to save all information when user clicks a 'Create Account' DEGE. We focus only the information for user to login later, i.e., username and password, though same process is applicable to include other information like address etc. All user actions, except the last one, are to input as traditional UDI or intra-device transmissions in ARC. Since UD is only for screen device, we may use the position of GE to represent DEGE (encode DEGE as position) as present UDI mechanism does. The result is same as traditional user input except no gear for touch sensing is required. However, UD of the 'Create Account' DEGE (Fig, 8) is more complicated. This UD needs to achieve two functions: inform screen device 3 that user wants to create an account (intra-device) and store the login information on WD 2 (extra-device). As shown in FIG. 8, we can construct this DEGE 411 by using icon 'Create Account' as GE 4112 and COMMAND/DATA for WD 2 as UD 4111. As mentioned above, the COMMAND/DATA can serve to inform screen device 3 what has been selected for it is only a different way to encode DEGE and the screen device 3 can understand its meaning due to intra-device transmission.

To store information on WD2, we assume that screen device 3 and WD 2 do not know each other's name and separate the process into two steps. Each step represents a DEGE with same GE and UD to issue COMMAND/DATA for WD 2 as following:
a. 'WHO(*Alice*)': screen device 3 *'Alice'* enquires the name of WD 2 and gets the WD-ID (*Bob* 24) from WD 2.
b. *'ST*(*Bob, Alice,* USERNAME, X, PASSWORD, Y): screen device 3 commands WD 2 '*Bob*' to save a record containing the username X and password Y of an account on screen device 3 *'Alice'.*

Step b requires information WD-ID (*Bob* 24) from step a and also the username (X) and password (Y) set by user. As listed in FIG. 8, this corresponds to use two DEGEs at the same location to complete the protocols. In this way, cyborg can 'memorize' the login information while acts to inform screen device for creating an account like human does. Since user does not need to concern about memorizing the information, he can use any long random strings. This depicts the way to enrich the scope of input data and simplify the role of action in a process by ARC and cyborg.

Instead of implementing all the protocols through DEGEs at the same location, we can subdivide the protocols into DEGEs at different locations. For example, the 'WHO' command can be a DEGE at one location or storing username and password can be carried out by two DEGEs at different locations and create two records on WD 2. One location requires one action to select, i.e., a type-2 AFDT for establishing a transmission channel. Splitting into DEGEs at different locations may seem to complicate the process but user can be aware of the details of protocols and what information is exchanged. It is clear that a single action evokes multiple transmissions in this process: from broadcaster to receiver and WD and from WD to receiver. They are transmissions occur on the temporary network formed by the action (type-2 AFDT connects broadcaster, receiver, and WD) and are dependent or related transmissions as initiated by one UD. The redundancy of GE and UD plays a key role to have the purpose of forming such network (action upon GE) realized by these transmissions (initiating a series of transmissions by UD).

### Embodiment 2 - Cyborg Login

In a login session, when user decides to login a registered account, screen device 3 may base on similar process to extract data from WD. As shown in FIG. 9, we can create a 'Login' DEGE on the screen with the command *'GET*(*Bob, Alice,* USERMANE, PASSWORD)' as UD for extracting the stored record from WD. When user selects this DEGE, WD 2 will receive the UD to look for the record (*Alice,* USERNAME, X, PASSWORD, Y) in its storage and output the record.

It is ready to apply these embodiments for cyborg to register and login an account on a server connected to screen device 3. We can replace the name of screen device 3, *Alice* 31, in the commands by the name to refer the server, say *ServN.* WD 2 will memorize the login information for the account on server and the protocols are same as to store and retrieve data by screen device 3. In these register and login embodiments, user only needs to decide whether to initiate the process or not and will not suffer to memorize complex string or input character by character. Once he decides to evoke the process and select, said the 'Login' DEGE, WD will provide the detail information and complete the login process. Cyborg surpasses user in handling information and applying cyborg for account authentication brings several fundamental changes to present process. First, the user does not need to memorize information, such as password, for the create-account action will store it in WD. From the viewpoint of human, it is same as a set-and-forget password. The user can set a long and random (LR) password, e.g., 20 characters, to protect an account.

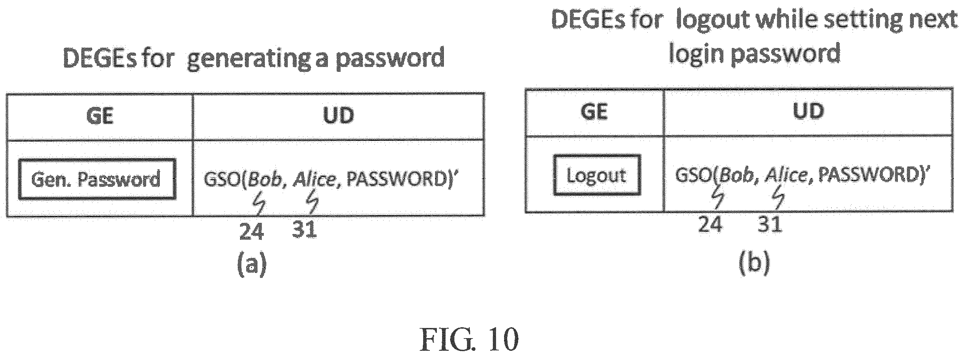

Secondly, instead of having a person to set a LR password, the user can have the password generated by WD randomly. We can use the command *'GSO*(*Bob, Alice,* PASSWORD)' to construct a 'Gen. Password' DEGE (FIG. 10(a)). When user selects this DEGE, the screen device will receive a random data as password that is memorized by cyborg (stored on WD). The user not only do not need to concern about memorizing the string but also can enter the whole string by one action (instead of 20 actions for a 20-character password). We can refine the 'GSO' command to include more parameters while generating the random data, such as its size, a seed for random data generator, or choosing different pseudorandom number generators. In this way, cyborg's computing power can generate information beyond human scope.

In the third place, the user can change the password frequently for memorizing string is not an issue. As shown in FIG. 10(b), the 'GSO' command can be included in a 'Logout' DEGE so that each time selecting this DEGE to log out will set new password to login in the future.

### Embodiment 3 - Tag Authentication

We do not need username/password to authenticate a cyborg. A long string (tag) can serve as an identity for authentication and increase the effectiveness of protection as well. Screen device/server can use an identification string (tag), instead of separate username and password, as an identity to recognize the account owner and request a party to provide the tag for authentication. Tag is effective temporarily (for it may be changed frequently as above) and locally (only the particular screen device/server can recognize). We may regard a tag as the concatenation of username-password for cyborg can use a LR string as username and combining with password is equivalent to a longer LR string. Thus, we can use a tag to authenticate a cyborg for accessing an account, i.e., as a way to login an account. The tag authentication process is same as the register and login process as mentioned above. In registration, we can use DEGE to set a string as tag and store on WD 2 for authenticating cyborg in the future, i.e., to tag cyborg. The login session will use a DEGE to retrieve the stored tag from WD 2.

In this tag authentication, we deduce an account from the tag. Tag is similar to cyborg's 'fingerprint' that serves for identifying cyborg in a particular application. It is equivalent to the cyborg's identity from the perspective of server/screen device. When cyborg 8 needs to create multiple accounts on a server, we can add more information for storing the tag as a record on WD 2. A new field such as serial number can be added if record with same server name already exists. Thus, screen device/server can identify not only a cyborg but also his particular account. This is different from the username/password mechanism that no fixed information like username is required to login. It is easy to lock on and attack a fixed username. In comparison, tag is changeable and disposable like a one-time password. On the other hand, we need an identification system (e.g., a public key infrastructure PKI) for screen device/server to confirm cyborg is real, not virtual or fake, at the beginning. After this initial confirmation, the tag is assigned for subsequent authentication. This is similar to avoid the man-in-the-middle attack by constructing a database for each individual party in the group. An identification system like PKI acts as the fundamental database so that one party can check the other's identity when they meet first. After that, they can exchange tags to recognize in the future.

Replacing username/password by tag can separate two issues completely: naming an account and the way to identify the account owner. Screen device/server can name an account in a private way without to disclose publicly. Tag is an alias of the account for them to recognize the owner. The account may have other aliases, each for a specific purpose or application. For example, email address can be treated as another alias only for dropping mails to the account. It can be a short string which human can easily memorize. Or, we can use a tag as email address and apply similar process to store/retrieve it in/from WD 2. We can use 'EMAILADD' as the attribute to specify a record containing the email address. This tag is only for mailing purpose and does not disclose any information about how to login the account. Today, using email address as username not only discloses the login information (username) but also reveals the account owner (from email address) and makes the password easy to guess.

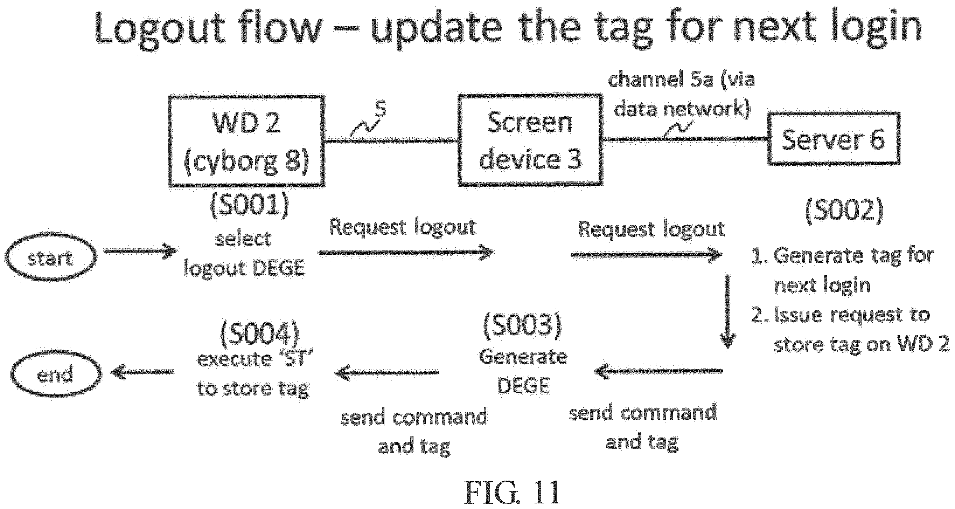

Server also needs to ensure all tags are different at the same time, or no-collision. Server can use various methods to ensure the no-collision requirement. It can generate the tag to login in the future instead of WD 2 to ensure that new tag is always different from tags in the database. FIG. 11 shows a 'logout' flow for server 6 to generate the new tag as the new login information. As shown, screen device 3 connects to WD 2 and server 6 through channel 5 and 5a (a network connection), respectively. When received a 'logout' request, server 6 can generate the tag and issue a 'ST' command to store the tag on WD 2. The channel 5 established by selecting the logout DEGE (i.e., data channel when user selects the 'Logout' DEGE) transmits a series of commands in two directions as shown in FIG. 11. It is possible for WD 2 to generate the tag instead of server. Additional protocols are required to loop between WD 2 and server 6 through the connections until server 6 confirms there is no-collision.

### Embodiment 4 - bidirectional authentication

WD 2 can authenticate screen device/server as well for it is device-to-device authentication. This means cyborg can authenticate screen device/server. It is a bidirectional authentication which two parties authenticate each other.

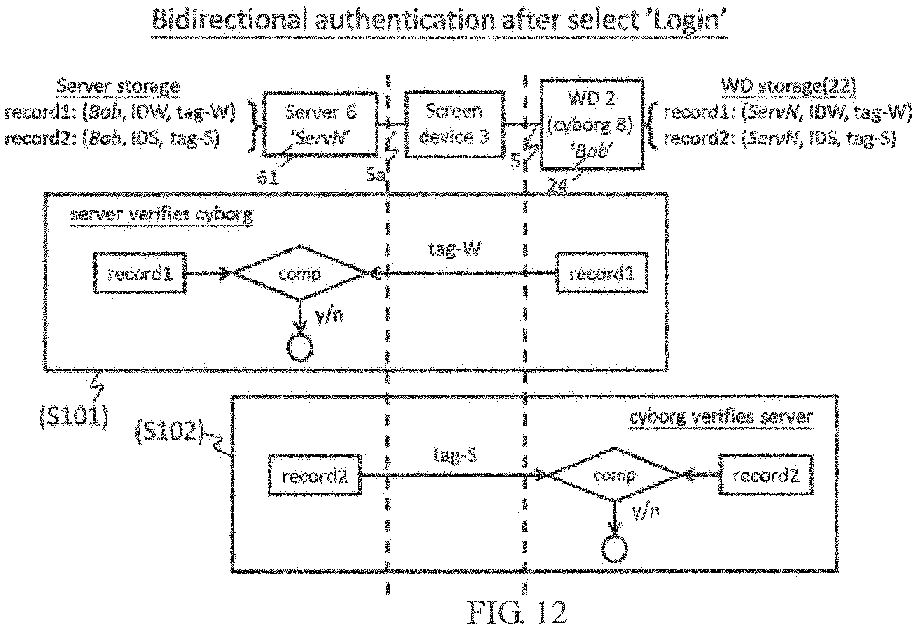

We can illustrate bidirectional authentication based on tag authentication. Screen device/server can authenticate cyborg 8 as mentioned in Embodiment 3. Tag authentication is reciprocal to both sides that WD 2 (cyborg 8) can apply the same method to authenticate server/screen device. In ARC, action does not provide information in one direction as in traditional user input. It established a channel for bidirectional transmission. This enables the reciprocity for two parties to verify each other. We consider a scenario as shown in Fig, 12. When user selects the DEGE to login, a channel (5 and 5a) is established to connect server 6 and WD 2 through screen device 3. Two new data attributes, 'IDW' and 'IDS' are used to represent the record is a tag for WD 2 and server 6, respectively. As mentioned, through UD of DEGE, server 6 can request WD 2 to provide a tag (tag-W) for authentication. Similarly, through the same channel, WD 2 can request server 6 to provide a tag (tag-S) for authentication. After receiving the tag, WD 2 and server 6 can authenticate each other by comparing the received tag and the tag stored locally. If they match, identity is confirmed. WD 2 can use indicator 23 to show the verification is true, false, or in process. FIG. 12 illustrates these protocols. Server 6 and WD 2 (cyborg 8) need to exchange tag-W and tag-S to create records in respective storage during registration. The process is similar as in Embodiment 1. For example, in registration, server 6 can save its tag (tag-S) on WD 2 by a 'ST' command and request WD 2 to generate a tag by 'GSO' command, *ST*(*Bob, ServN,* IDS, tag-S) and GSO(*Bob, ServN,* IDW).

Based on the connection (channel 5 and 5a), all methods that people have developed for device-device authentication, such as asymmetric cryptography, are applicable for server-cyborg authentication. Server 6 and cyborg (WD 2) may have certificates issued by Certificate Authority (CA) of a public key infrastructure (PKI). Based on the certificates, server and cyborg can authenticate each other at first encounter (as registration). Later on, they can may keep using public key cryptography, switch to a random tag as mentioned, or combine both into a hybrid scheme for authentication. This suggests a global PKI including people, as cyborgs, and servers can serve for any two parties, i.e., cyborg-cyborg, cyborg-server, and server-server, to verify each other's identity at first encounter. It is clear that we can implement these functions by expanding the command set of WD 2. In addition to simply retrieving a stored data, WD can assist user in computation such as encryption or decryption.

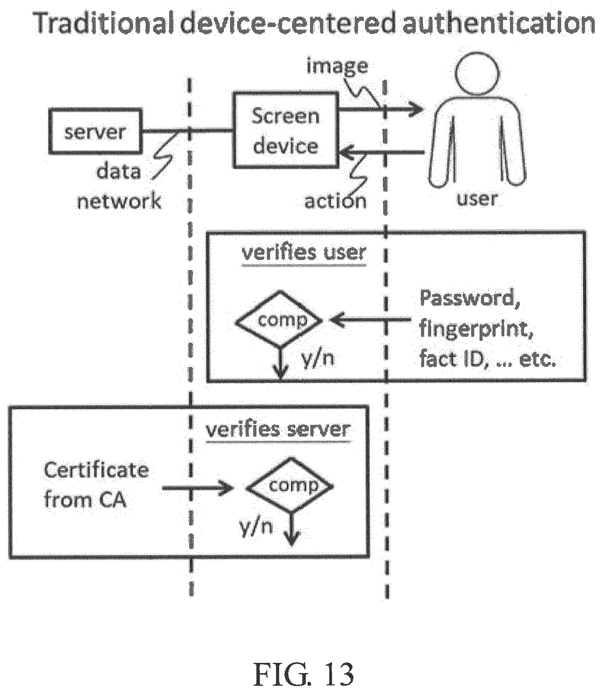

In FIG. 12, screen device 3 plays the channel role to pass information between server and cyborg. This is similar to the tethering or phone-as-modem, which a mobile phone shares its internet connection with a connected computer. It bridges the long-range (with server 6) and short-range (with cyborg or WD 2) connections. Server 6 and WD 2 (cyborg 8) can directly authenticate each other through this tethering structure. This is different from present user-server authentication (FIG. 13). Screen device authenticates user by password, fingerprint, face recognition, etc., i.e., one-way authentication, and relies on PKI, using certificate issued by CA, to authenticate mutually with the server. Because of the one-way authentication, screen device controls the process (takes all necessary information from user and server) and acts like an arbitrator to authenticate both rather than passes information to both as a channel. Another difference with this disclosure is to rely on a parent node or child node to perform authentication process. WD 2 performs authentication process (for user) as a child node while screen device in FIG. 13 performs similar process for user as a parent node. User has no control over his parent node. It is risky to adopt such authentication for other party can hack into screen device and take over the activity that user cannot notice. On the other hand, WD 2 is a child node of user that relying on user for the connection. Breach has to go through user.

### Embodiment 5 - cyborg signs a message

In this embodiment, we depict the way for user to perform digital signature (DS) directly as a cyborg, i.e., cyborg generates his own signature and verifies other's signature. WD 2 can use indicator 23 to show the verification is true, false, or in process. We assume a PKI and CA that assigns a pair of keys, public key (pk) and secret key (sk) (certificates), to a party same as present implementation of public key cryptography.

DS is based on the public-key encryption (PKE), which message encrypted by pk needs sk for decryption and vice versa. Thus, this embodiment is applicable to other process based on PKE. For example, use PKE to confirm sender's identity and a message is undeniable coming from the sk owner, i.e., non-repudiation. Similar as in Fig, 13, traditional DS is screen device holds the pk-sk pair and generate DS for user. Though it seems device performs DS on behalf of user, it is indeed the device takes charge of the DS. For lack of the ability to verify information, user (human) can only accept information from screen device and cannot make any judgement. This also has the same issue as in authentication that a parent node performs DS. Cyborg, on the other hand, performs DS based on a child node of user, WD 2.

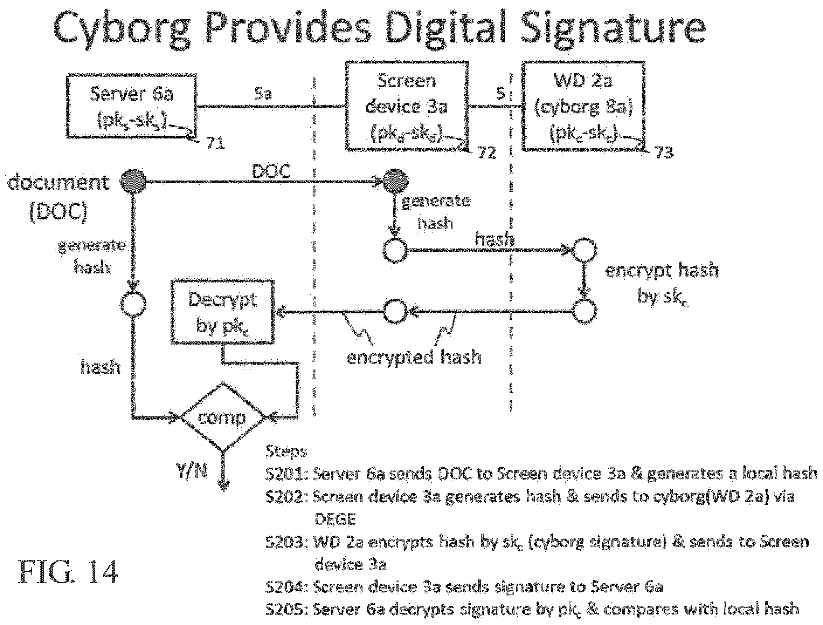

FIG. 14 shows the process for cyborg to sign a message. Server 6a, WD 2a and screen device 3a each has its own pk-sk pair specified with different subscripts and connected through a channel (5 and 5a). The scenario is server 6a sends a document DOC to screen device 3a for cyborg 8a to review and sign. Traditional DS is: when user clicks a 'sign' icon, screen device will generate a hash from the document, encrypt the hash with sk_{d}, (as the signature from user) and send to server. Server can use pk_{d} to decrypt signature back to hash and compare with a locally generated hash. If both match, user signs DOC. As shown in FIG. 14, WD 2a generates signature instead of screen device 3a, i.e., move the operation of encrypting hash to WD 2a. Since hash is encrypted by sk_{c} (WD 2a) instead of sk_{d} (screen device 3a), it is a signature signed by WD 2a, a child node of user, which user has to provide input for it actively. This justifies regarding the signature as provided by user. To user, this is similar to sign a document by action. The process is as following. Screen device 3a can request WD 2a to encrypt the hash through DEGE with the command ENCRYPT (*Bob, ServN,* hash) as UD. WD 2a output the hash encrypted by sk_{c} to screen device 3a and then to server 6a. Then, server 6a uses pk_{c} to extract a hash from signature and compares this hash with the hash it generates. If both match, user signs the DOC. In a similar way, cyborg can also verify if a document is issued by the server, i.e., to verify the signature of server. In this case, server 6a could encrypt the hash by its skₛ and pk_{c} successively as signature and send to screen device 3a together with the document. Screen device 3a sends this encrypted hash together with an unencrypted hash generated by itself to WD 2a. WD 2a can decrypt the encrypted hash successively by use sk_{c} and pkₛ to get the hash generated by server 6a. WD 2a can compare these two hashes, generated by server 6a and by screen device 3a, If two match, the DOC is from server 6a. This does require new command in WD 2a and, indeed, all the protocols can be integrated into one command such as 'SIGN'. The 'SIGN' will first check if DOC is from server 6a and to provide signature only when this is confirmed.

This DS process is an example to expand human computing power by cyborg. Also similar to authentication, the pk-sk pair is only necessary at the first encounter, i.e., when server 6a and cyborg 8a encounter for the first time. After that, they may exchange tags or pk-sk pair (only effective between server and cyborg) for encryption later on. Furthermore, server and cyborg can base on a signature to authenticate each other. They can exchange a string before leave (same as to log out) and then, next time, send the hash of string (through cryptographic hash function) as a signature for recognition (same as to login each other). Recipient can verify if signature matches with the result of transforming the string through same function. This established a signature-base authentication.

### Embodiment - 6 virtual device interaction

In FIG. 14, screen device 3a plays two roles: to pass (between server 6a and WD 2a) and to generate (like hash or DEGEs to interact with cyborg) information. These functions used to be centralized under the operating system OS (32 in FIG. 6(b)). This centralized structure endangers the robustness of operation, like FIG. 14, as any leak or bug in operating system could affect the effectiveness of information between server 6a and WD 2a. To interact with user or cyborg, screen device (indeed the OS) needs to decrypt information from server 6a and convert into image or GE. Information is decrypted before it reaches the destination and potentially could be manipulated. The situation is even worse if we consider the integrity of OS is not guaranteed. People adopt update-through-network in order to maintain the integrity of OS; however, this does imply integrity is an expectation and not achievable at this moment.

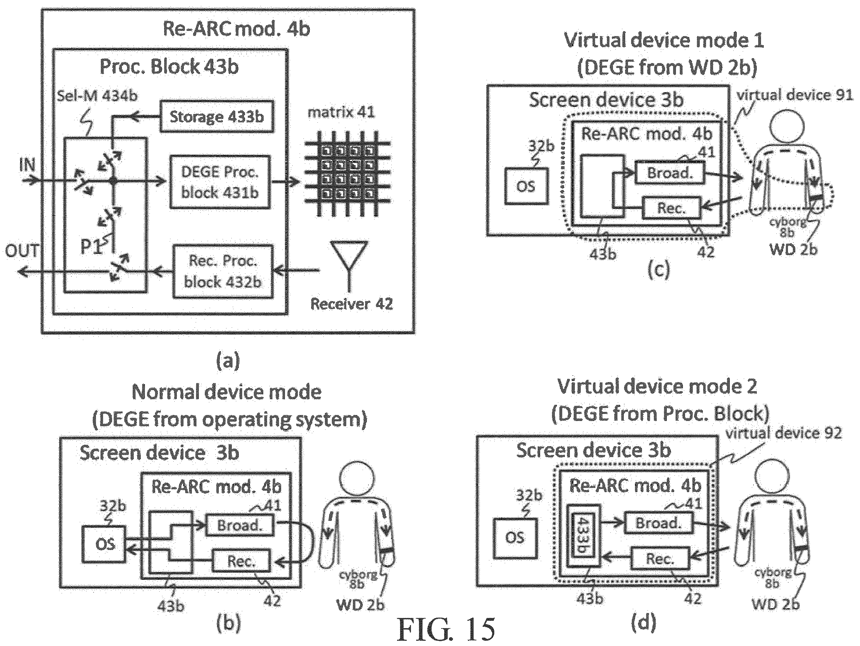

In this embodiment, we isolate the functions to interact with user/cyborg from OS and implement these functions in a reconfigurable ARC transceiver module, Re-ARC mod. 4b (FIG. 15(a)). These functions include generating DEGE and processing the received UD. Reconfigurable means this transceiver module can receive input from various sources (not only from OS 32 as ARC mod. 4 shown in Fig, 6(b)) and turn into DEGE to interaction with user/cyborg. We can regard a source and Re-ARC mod. 4b, together, as a virtual device similar as OS 32 provides input to ARC mod. 4 in the screen device 3 (FIG. 6(b)). This is more secure than have the OS control all information in traditional device. Re-ARC mod. 4b has simple functions, which do not need to update constantly. It will process its input data only to output as DEGEs for user/cyborg. We may further have Re-ARC mod. 4b to decrypt data without relying on the OS. As shown in FIG. 15(a), the Re-ARC mod. 4b. includes Proc. Block 43b, matrix 41 and receiver 42. The Proc. Block 43b includes, DEGE Proc. block 431b to process input data into DEGE and send to matrix 41, Rec. Proc. block 432b to process the data from receiver 42, Storage 433b, and a Sel-M block 434b to select the sources of input and output data. As shown, there are three different sources can provide input to 431b, from IN, 433b, and from PI (i.e. from 432b). 434b may set the data from 432b to be the output of Re-ARC mod. 4b, OUT, or to be the input of 431b through P1. 434b may dynamically select different sources as the input to 431b. For example, after not receiving data from any sources for a while (such as lock the screen for power saving after 1 minute) or initial power-on, 434b may select 433b as the input to 431b for screen lock or a screen to login for recovering from hibernation or initial authentication when power-on. The data from 433b may include DEGEs that authenticates user/cyborg for switching to different sources, such as selecting IN or 432b or both as input to 431b. In other words, 434b can select sources according to the data from 432b, i.e., data from cyborg through receiver 42. Thus, according to 434b, 431b can have input from one or more of these sources. FIGS. 15(b) to 15(d) show the operating mode of Re-ARC mod. 4b when 434b selects one these sources as input to 431b. When multiple sources are selected as input to 431b, we can have more complex interactions with user/cyborg; however, the basic principle is same as the one source case.

FIG. 15(b) shows the normal mode operation that 434b selects IN as the input source to 431b and output of 432b connects to OUT. This corresponds to the operation of screen device 3b that OS 32b and 4b work together to interact with user/cyborg. FIG. 15(c) shows a virtual device mode 1 that 434b sets the output of 432b to PI as the input to 431b. In this mode, WD 2b acts as a source to provide data for Re-ARC mod. 4b to convert into DEGEs. When a DEGE is selected, the UD will return to WD 2b. This is an intra-device transmission of a virtual device (4b and 2b as enclosed in the dotted line), which user provides input to the virtual device. WD 2b does not need to keep transmitting data to 43b for generating DEGE or refreshing the screen. 43b can save the data in 433b and refresh the screen by itself. In this mode, user can maintain the data on WD 2b securely even through screen device 3b. In FIG. 15(d), 434b sets the 433b as the source to provide data for 431b and keeps the output of 432b within 43b. This means 4b acts as a virtual device to interact with user/cyborg that 43b use data in its storage 433b to generate DEGE and receives the selected UD. In this virtual device mode 2, data of 433b can be a screen for authentication and 43b acts as a screen lock to request user/cyborg to login. This prevents an unauthorized user/cyborg to access 32b or the network connections of 3b. We can have this mode as the default mode of 434b when power-on or recover from hibernation (i.e., 434b enters this default mode if it does not receive data from sources for a while). In this case, cyborg operation is better than traditional UDI. Any selection by cyborg, even simply touch the screen, can evoke cyborg authentication as mentioned in previous embodiment. Same action can provides the whole login information from WD 2b instead of having user to enter character by character. When 434b receives the correct string to login, it may reconfigure the input of 431b subject to the request of user/cyborg such as normal device mode or virtual device mode 1 etc.

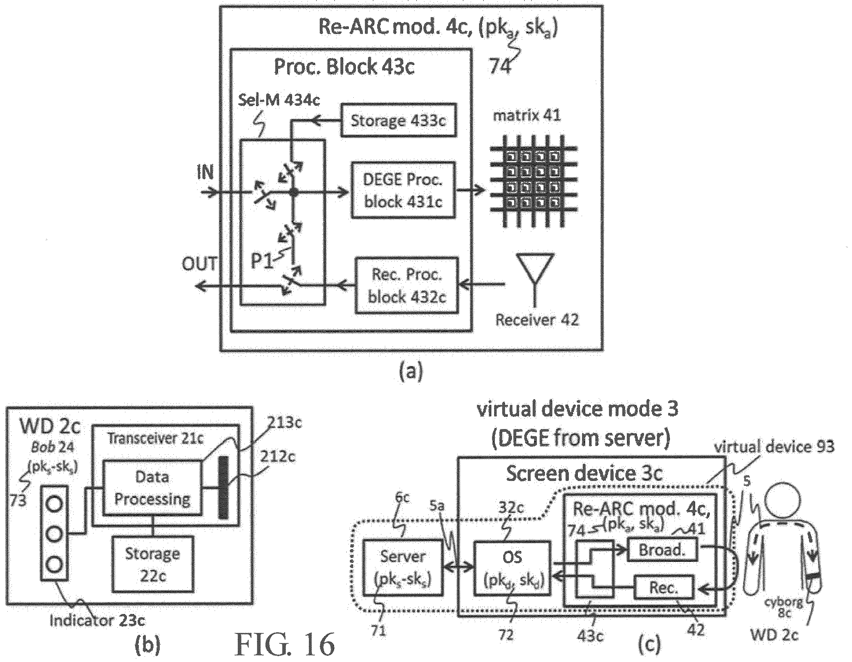

We can extend this virtual device concept to have a server connecting to screen device on the network as an information source to Re-ARC mod. as well. As shown in FIGS. 16(a) to 16(c), Re-ARC mod. 4c, WD 2c, server 6c, and the operating system 32c of screen device 3c each has its own public and secret key pair from the same PKI, i.e., 74, 73, 71, and 72 respectively. We can have various structures for 4c to carry out the PKE operations based on 74. 4c may have independent blocks, inside or outside 43c, to carry out the decryption and encryption operations. The decryption (encryption) block can locate before input to (after output from) 434c or right before input to 431c (right after output from 432c). Alternatively, we can have the decryption (encryption) operation executed inside 431c (432c) as considered in FIG. 16(a). Based on the PKE, server 6c can securely transmit data to 4c only for converting into DEGE and interact with user/cyborg. 4c can also use PKE to encrypt data and output securely to 6c. Screen device 3c has at least two key pairs, 72 and 74 belonged to OS 32c and Re-ARC mod. 4c respectively, from the PKI and one (74) is dedicated for user/cyborg interaction. The security of 4c is easier to ensure than the whole screen device 3c as it has simple function and data can only be sent out as DEGE. This ensures the data security between server 6c and Re-ARC mod. 4c. We can regard 6c and 4c forms a virtual device 93 to interact with user/cyborg (FIG. 16(c)). Likewise, WD 2c can perform PKE to exchange data with 6c as discussed in the embodiment of DS.

### Embodiment 7 - file encryption

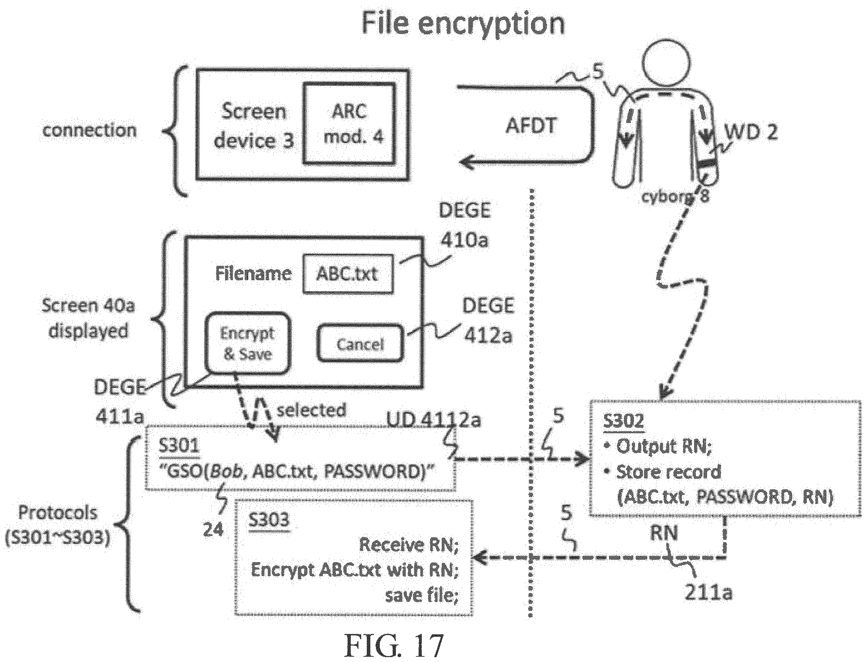

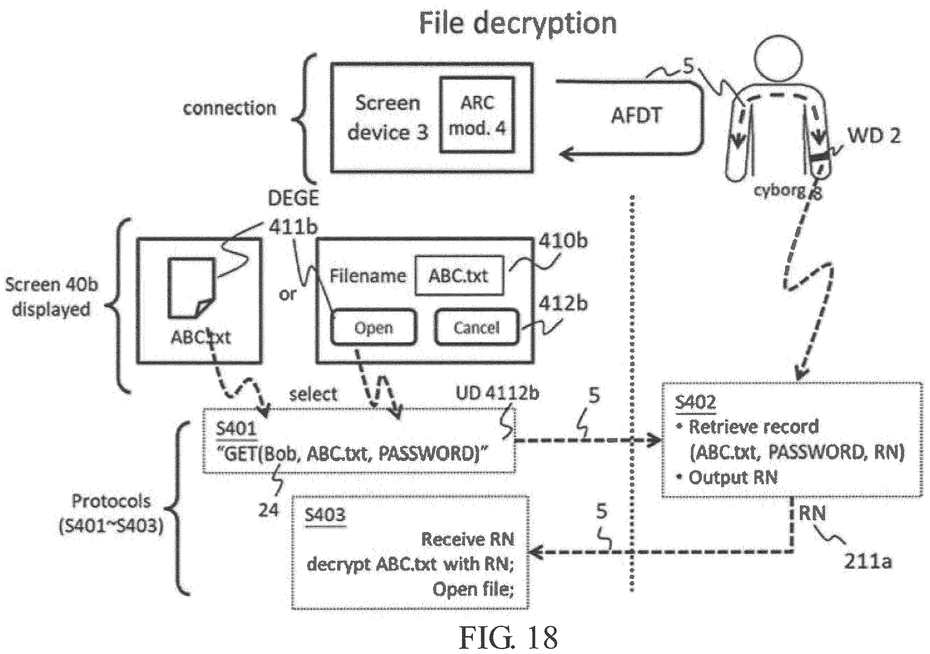

Encrypting data can protect the information privacy; however, user has to memorize the passwords and type the whole string every time for decryption. Longer password may increase the protection but complicates the input process and is difficult to memorize. We can adopt cyborg concept to resolve these issues for action is not to provide a single character but a channel for transmitting multiple characters. WD 2 can generate a random key for encryption and save the filename and key as one record on WD 2. To open the file means to request WD 2 to provide the key corresponding to the filename for decryption. These protocols are similar to setup a password while registering an account and retrieve it to login. As shown in FIG. 17, screen device 3 displays a screen 40a that includes a DEGE 411a with UD 4112a containing the "GSO' command to request a random number RN 211a from WD 2 for encryption. The GE of 411 a should narrate these activities in a clear and concise way so that user can expect the result of selecting this DEGE. FIG. 18 shows the protocols for opening an encrypted file (decryption). Screen device 3 can display a screen 40b in two different ways to request RN 211a from WD 2 by the 'GET' command. As in FIG. 17, DEGE 411b can use the 'Open' icon as GE to open the encrypted file when selected or the file icon as GE to open the encrypted file when double clicked. The later means to output the UD 4112b with 'GET' command after an intra-device input of double-clicking. Both cases create a file opening procedure with following steps: requesting the key, decrypting, and opening the file.

### Embodiment 8 - continuous authentication and inputter recognition

All present authentications, such as password, fingerprint, or face recognition, can only confirm the identity of user during the authenticating process. After the process, they cannot distinguish a party has passed, failed to pass, or not yet been authenticated. In other words, user is indistinguishable after authentication. These methods cannot ensure subsequent interaction or input is from the authenticated user in the strict sense for they do not have a mechanism to distinguish or tag authenticated people. Without a tag mechanism, the effect of authentication is valid only at an instant and cannot continue. In addition, tagging also means device can recognize input from different people. It is a function for inputter recognition. Present personal device does not have this function and is the reason why it is a 'personal' device. Different from interacting with user, based on information to recognize its origin (source) is a well-established mechanism in device-device interaction (e.g. base station recognizes input from each handset). Thus, we can use WD 2 for authenticating cyborg continuously or recognizing the input from different cyborgs. In this case, it is a child node of user (WD 2), not a parent node of user (like cell phone), to authenticate user. Instead of adopting the full mechanism from data communication (such as use PKE to identify the information source), we can use simpler mechanism for this continuous authentication and inputter recognition.

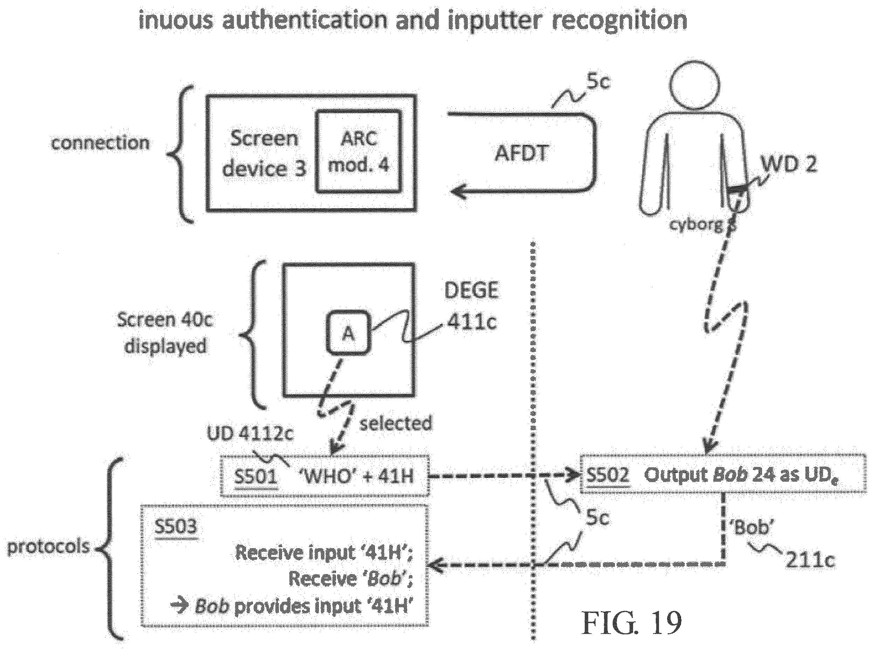

A simple way for screen device to recognize a cyborg is to add the 'WHO' command in UD for every DEGE. For example (FIG. 19), the screen 40c shown on the screen device 3 has character 'A' (DEGE 411c). Its UD 4112c includes the ASCII code of character 'A' 41H and a 'WHO' command. Thus, when user selects 'A', WD 2 will output its name 'Bob' according to the 'WHO' command and the receiver 42 of screen device 3 would receive the ASCII code and *'Bob'.* Screen device 3 can conclude that *Bob* inputs 41H.

We can have mechanisms other than to enquire the cyborg's identity by 'WHO' command. All cyborgs may register first before interacting on the screen device. All the registered cyborgs form a group to interact together. During registration, screen device can assign a tag for each group member to recognize who provides the input, i.e. recognize inputter. WD can store this tag and provide it upon a request from screen device. Screen device can add commands to request for a tag in the UD of every DEGE. This enables screen device to accept inputs only from an authorized person (continuous authentication) and interact with multiple persons together by recognizing the input from each one (inputter recognition).

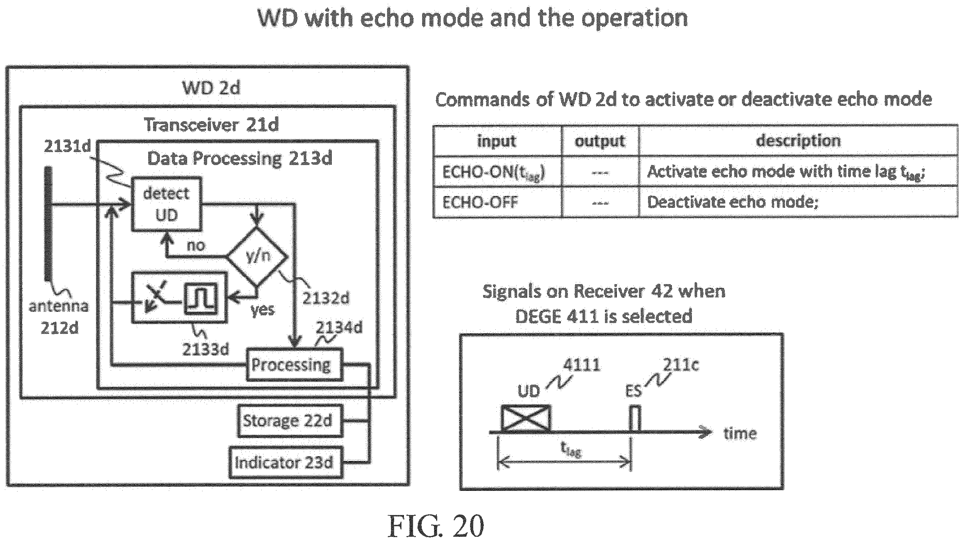

For example (FIG. 20), a WD 2d can operate in an echo mode, which it will output an echo signal (ES) when detects a data (UD), by 2131d, 2132d, and 2133d. This echo mode can be activated or deactivated by command "ECHO-ON(t_{lag})" and "ECHO-OFF" respectively. "t_{lag}" is a parameter while activating echo mode. It represents the time lag between detected UD and ES. Thus, during registration, screen device can activate this echo mode and assign each authenticated WD a t_{lag} as a tag to differentiate the cyborg.

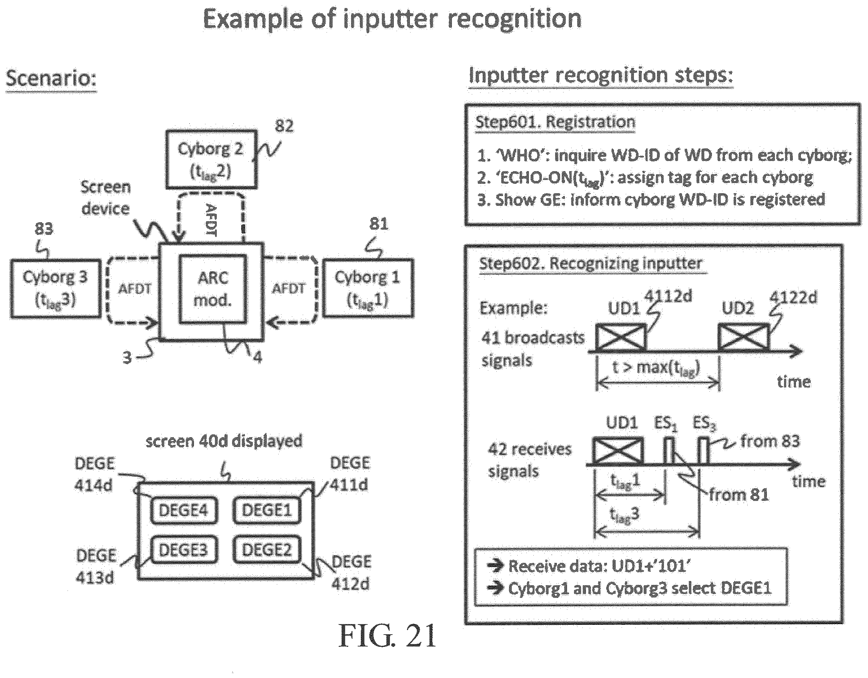

FIG. 21 shows the scenario for three cyborgs, 81, 82, and 83, interact on screen device 3 together. During registration, screen device 3 can include "ECHO-ON(t_{lag})" command in the DEGE for registration and assign different t_{lag} for each cyborg. As shown, two UDs should have proper time separation in order to accommodate all t_{lag}. This allows all cyborgs to select the same UD. Because of intra-device transmission, we can encode all DEGE by n-bit data (i.e., UD is an n-bit data) to simplify the transmission. For example, assume there are less than 255 DEGEs on the screen so that 8bits data is sufficient to represent all DEGEs. By assigning the tag (t_{lag}), each cyborg represents an additional bit. For the three-cyborg scenario considered in Fig, 21, it is equivalent to use 11 bits to represent an input: the first 8 bits representing a DEGE on the screen and the last 3 bits represent the inputters. As shown, when screen device 3 receives data UD1+'101', it means cyborg 1 and cyborg3 select the DEGE1 as the input respectively. This also implies screen device can authenticate every input continuously.

As illustrated, this method allows cyborgs to select one DEGE at the same time, which is not possible in present methods, such as combining fingerprint authentication and touch sensing. The intra- and extra-device transmissions activated by one action can operate cooperatively in this process, Extra-device transmission (screen device 3 with WD 2d) assists the intra-device transmission (user input to screen device 3) to identify its source (i.e. to specify which transmission channel or path that selects the input information). Based on this echo mode operation, we do not need to adopt complex scheme, such as cryptography, to recognize user in an input process. This can practically implement inputter recognition. We can enhance the data security by verifying every input to a screen device and only authorized cyborg could operate a device. This offers a strict protection for system with sensitive data, like servers for defense or financial applications. We can firmly associate every input with its provider and the result is not deniable (nonrepudiation). In addition, inputter recognition expands the device input scenario from single inputter to many inputters. A screen device is not restricted to a personal device. It can serve like a real desktop or act as a mediator, umpire, or dealer to conduct the interactions among cyborgs. We can enable group interactions for cyborgs surrounding a table-size screen device, such as discussing documents or ideas, gaming, voting, or sealing a deal, etc.

In conclusion, we disclose a secure system by expanding human ability in handling digital information, such as memory, computing, or output a digital data, as a cyborg. Cyborg implements these functions through a device that is a child, instead of parent, node of user. User's action is to establish a channel for connecting two devices. We can have user input accompanied by data transmissions simultaneously to assist the input without extra user actions. User can use complex, long, random strings as if generated by user. This not only simplifies but also makes the authentication process more effective. We disclose the interactions such as device recognizing cyborg (authentication and inputter recognition), cyborg recognizing server (bidirectional authentication), and protecting privacy (file encryption). In addition, we also disclose a reconfigurable ARC module (Re-ARC mod.) for implementing various virtual device mode operations. User/cyborg can securely interact with a remote server, which is connected through a local screen device. This prevents to rely on an imperfect operating system that requires constantly update to handle the encryption and decryption processes.

It is obvious that the disclosure being thus described may be varied in many ways. Such variations are not to be regarded as a departure from the spirit and scope of the disclosure, and all such modifications as would be obvious to one skilled in the art are intended to be included within the scope of the following claims.

Although the disclosure has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the disclosure.

## Claims

1. A system, comprising:
a mobile computing device having a mobile computing device identifier, comprising:
a first transceiver, configured to transmit and receive data wirelessly; and
a first storage, coupled to the first transceiver; and
a communication display device with a communication display device identifier, comprising an ARC (action range communication) module, wherein the ARC module comprises:
a display matrix, wherein at least one portion of the display matrix is configured to wirelessly transmit an invisible string and to form a user-visible indication which the invisible string is relevant to; and
a second receiver, configured to receive data wirelessly;
wherein when the user-visible indication on a portion of the display matrix is selected, a channel is formed to connect the portion of the display matrix forming the user-visible indication, the first transceiver and the second receiver,
wherein the invisible string is coupled wirelessly to the first transceiver and the second receiver from the portion of the display matrix forming the user-visible indication through the channel, and the mobile computing device executes a task according to the invisible string.

2. The system of claim 1, wherein the first transceiver is configured to transmit an output string through the same channel to the second receiver, wherein the second receiver is configured to receive the invisible string and the output string.

3. The system of claim 2, wherein the communication display device is configured to recognize a user who selects the user-visible indication according to the output string.

4. The system of claim 2, wherein,
the invisible string comprises a command and a data string;
the data string comprises the mobile computing device identifier;
the task according to the command is to request the mobile computing device to create and store a record, and to output a reply string as the output string;
the mobile computing device creates the record on the first storage and generates the reply string according to the data string in the invisible string; and
the record comprises at least a portion of the data string of the invisible string and the reply string.

5. The system of claim 4, wherein,
the user-visible indication represents creating an account on the communication display device or on a server connected to the communication display device and referred by a server-identifier, and the data string of the invisible string comprises the communication display device identifier or the server-identifier;
the record comprises the communication display device identifier or the server-identifier, and the reply string comprises a log-in string to login the account to be created; and
the communication display device receives the log-in string through the second receiver and creates the account, or provides the log-in string to the server and creates the account on the server.

6. The system of claim 4, wherein,
the user-visible indication represents registering a server on the mobile computing device, and the server connects to the communication display device and is referred by a server-identifier; and
the data string comprises the server-identifier, and an identification string of the server and the task according to the command is to request the mobile computing device to store the server-identifier and the identification string on the first storage.

7. The system of claim 4, wherein,
the user-visible indication represents encrypting or decrypting at least one file;
the data string comprises a filename of the file;
the record comprises the filename, and the output string is a key for encrypting or decrypting the file; and
the communication display device receives the key from the second receiver and utilizes the key to encrypt or decrypt the file.

8. The system of claim 4, wherein,
the user-visible indication represents logging out an account on the communication display device or on a server connected to the communication display device and referred by a server-identifier;
the record comprises the communication display device identifier or the server-identifier and a new log-in string to login the account next time;
the reply string comprises the new log-in string; and
the communication display device receives the log-in string through the second receiver and logs out the account, or sends the log-in string to the server and logs out the account on the server.

9. The system of claim 2, wherein,
the invisible string comprises a command and a data string;
the task according to the command is to request the mobile computing device to retrieve a record stored in the first storage; and
the mobile computing device finds the record in the first storage according to part of the data string and outputs at least part of the record in the output string.

10. The system of claim 2, wherein,
the invisible string comprises a command and a data string; and
the task according to the command is to request the mobile computing device to encrypt or decrypt the data string according to a data stored in the mobile computing device.

11. The system of claim 2, wherein,
the user-visible indication represents authenticating a server connected to the communication display device and referred by a server-identifier;
the invisible string comprises a command and a data string, and the data string comprises the server-identifier and an identification string of the server;
the mobile computing device authenticates the server according to a computing result of computing a stored record in the mobile computing device comprising the server-identifier and the identification string; and
the mobile computing device further comprises an indicator configured to show the result of authentication.

12. The system of claim 2, wherein
each of the mobile computing device and the communication display device has a pair of keys comprising public key (pk) and secret key (sk) assigned by a public key infrastructure (PKI) to perform asymmetric cryptography for data transmission;
the ARC module further comprises a processing block and the processing block has another pair of keys, another public key and another secret key assigned by the same PKI for performing asymmetric cryptography on the data transmission with the processing block.

13. The system of claim 1, wherein the ARC module further comprises:
a processing block comprising a second storage and coupled to the display matrix and the second receiver;
wherein the processing block is configured to process source data from one or more information sources to output the invisible string by the display matrix and to display the user-visible indication by the display matrix;
wherein the one or more information sources comprise at least one of the second receiver, an operation system of the communication display device and the second storage.

14. The system of claim 13, wherein the processing block is set to select the one or more information sources according to a data received by the second receiver; or the processing block sets the second storage as the information source after the processing block does not receive data from the second receiver or from the operating system over a period of time.

15. A communication display device with a communication display device identifier, comprising:
an ARC (action range communication) module, comprising:
a display matrix, wherein at least one portion of the display matrix is configured to wirelessly transmit an invisible string and to form a user-visible indication which the invisible string is relevant to;
a second receiver, configured to receive data wirelessly; and
a processing block, comprising a second storage and coupled to the display matrix and the second receiver;
wherein when the user-visible indication on a portion of the display matrix is selected, a channel is formed to connect the portion of the display matrix forming the user-visible indication, a first transceiver of a mobile computing device and the second receiver,
wherein the invisible string is coupled wirelessly to the first transceiver and the second receiver from the at least one portion of the display matrix forming the user-visible indication through the channel, and the mobile computing device executes a task according to the invisible string,
wherein the processing block is configured to process source data from one or more information sources to output the invisible string by the display matrix and to display the user-visible indication by the display matrix;
wherein the one or more information sources comprises at least one of the second receiver, an operation system of the communication display device and the second storage.

## Amended claims

### Amended claims in accordance with Rule 137(2) EPC.

1. A system, comprising:
a mobile computing (2) device having a mobile computing device identifier, comprising:
a transceiver (21), configured to transmit and receive data wirelessly; and
a first storage (22), coupled to the first transceiver; and
a communication display device (3) with a communication display device identifier, comprising a module for communicating locally (4), wherein the module for communicating locally (4) comprises:
a display matrix (41), wherein at least one portion of the display matrix is configured to wirelessly transmit an invisible string by an electrode of the display matrix within the portion of the display matrix and the said at least one portion of the display matrix is configured to form a user-visible indication by displaying which the invisible string is relevant to; and
a receiver (42), configured to receive data wirelessly;
wherein when the user-visible indication on the portion of the display matrix is selected, a channel (5) is formed to connect the portion (411) of the display matrix (41) forming the user-visible indication, the transceiver (21) and the receiver (42),
wherein the invisible string (4111) is transmitted wirelessly to the transceiver (21) and the receiver (42) from the electrode within the portion (411) of the display matrix (41) forming the user-visible indication (411) through the channel (5), and the mobile computing device (2) executes a task according to the invisible string (4111).

2. The system of claim 1, wherein the transceiver (21) is configured to transmit an output string through the same channel to the receiver (42), wherein the receiver (42) is configured to receive the invisible string (4111) and the output string.

3. The system of claim 2, wherein the communication display device (3) is configured to recognize a user who selects the user-visible indication according to the output string.

4. The system of claim 2, wherein,
the invisible string (4111) comprises a command and a data string;
the data string comprises the mobile computing device identifier;
the task according to the command is to request the mobile computing device to create and store a record, and to output a reply string as the output string;
the mobile computing device creates the record on the first storage and generates the reply string according to the data string in the invisible string; and
the record comprises at least a portion of the data string of the invisible string and the reply string.

5. The system of claim 4, wherein,
the user-visible indication represents creating an account on the communication display device or on a server connected to the communication display device and referred by a server-identifier, and the data string of the invisible string comprises the communication display device identifier or the server-identifier;
the record comprises the communication display device identifier or the server-identifier, and the reply string comprises a log-in string to login the account to be created; and
the communication display device receives the log-in string through the receiver and creates the account, or provides the log-in string to the server and creates the account on the server.

6. The system of claim 4, wherein,
the user-visible indication represents registering a server on the mobile computing device, and the server connects to the communication display device and is referred by a server-identifier; and
the data string comprises the server-identifier, and an identification string of the server and the task according to the command is to request the mobile computing device to store the server-identifier and the identification string on the first storage.

7. The system of claim 4, wherein,
the user-visible indication represents encrypting or decrypting at least one file;
the data string comprises a filename of the file;
the record comprises the filename, and the output string is a key for encrypting or decrypting the file; and
the communication display device receives the key from the receiver and utilizes the key to encrypt or decrypt the file.

8. The system of claim 4, wherein,
the user-visible indication represents logging out an account on the communication display device or on a server connected to the communication display device and referred by a server-identifier;
the record comprises the communication display device identifier or the server-identifier and a new log-in string to login the account next time;
the reply string comprises the new log-in string; and
the communication display device receives the log-in string through the receiver and logs out the account, or sends the log-in string to the server and logs out the account on the server.

9. The system of claim 2, wherein,
the invisible string (4111) comprises a command and a data string;
the task according to the command is to request the mobile computing device to retrieve a record stored in the first storage; and the mobile computing device finds the record in the first storage according to part
of the data string and outputs at least part of the record in the output string.

10. The system of claim 2, wherein,
the invisible string comprises a command and a data string; and
the task according to the command is to request the mobile computing device to encrypt or decrypt the data string according to a data stored in the mobile computing device.

11. The system of claim 2, wherein,
the user-visible indication represents authenticating a server connected to the communication display device and referred by a server-identifier;
the invisible string (4111) comprises a command and a data string, and the data string comprises the server-identifier and an identification string of the server;
the mobile computing device authenticates the server according to a computing result of computing a stored record in the mobile computing device comprising the server-identifier and the identification string; and
the mobile computing device further comprises an indicator configured to show the result of authentication.

12. The system of claim 2, wherein
each of the mobile computing device (2) and the communication display device (3) has a pair of keys comprising public key, pk, and secret key, sk, assigned by a public key infrastructure, PKI, to perform asymmetric cryptography for data transmission;
the module for communicating locally further comprises a processing block and the processing block has another pair of keys, another public key and another secret key assigned by the same PKI for performing asymmetric cryptography on the data transmission with the processing block.

13. The system of claim 1, wherein the module for communicating locally further comprises:
a processing block comprising a second storage and coupled to the display matrix and the receiver;
wherein the processing block is configured to process source data from one or more information sources to output the invisible string by the display matrix and to display the user-visible indication by the display matrix;
wherein the one or more information sources comprise at least one of the second receiver, an operation system of the communication display device and the second storage.

14. The system of claim 13, wherein the processing block is set to select the one or more information sources according to a data received by the second receiver; or the processing block sets the second storage as the information source after the processing block does not receive data from the second receiver or from the operating system over a period of time.

15. A communication display device with a communication display device identifier, comprising:
an module for communicating locally, comprising:
a display matrix, wherein at least one portion of the display matrix is configured to wirelessly transmit an invisible string by an electrode of the display matrix within the portion of the display matrix and the said at least one portion of the display matrix is configured to form a user-visible indication by displaying which the invisible string is relevant to;
a receiver, configured to receive data wirelessly; and
a processing block, comprising a second storage and coupled to the display matrix and the receiver;
wherein when the user-visible indication on the portion of the display matrix is selected, a channel is formed to connect the portion of the display matrix forming the user-visible indication, a first transceiver of a mobile computing device and the receiver,
wherein the invisible string is transmitted wirelessly to the first transceiver and the second receiver from the electrode within the at least one portion of the display matrix forming the user-visible indication through the channel, and the mobile computing device executes a task according to the invisible string, wherein the processing block is configured to process source data from one or more information sources to output the invisible string by the display matrix and to display the user-visible indication by the display matrix;
wherein the one or more information sources comprises at least one of the receiver, an operation system of the communication display device and the second storage.
